# EUROPEAN PATENT APPLICATION

(11) **EP 4 783 317 A1**
(43) Date of publication of application: **29.07.2026**
(21) Application number: 26153468.9
(22) Date of filing: 22.01.2026
(51) Int. Cl.: H01M 50/176, H01M 50/209, H01M 50/528, H01M 50/533

(54) **SECONDARY BATTERY AND BATTERY MODULE INCLUDING THE SAME**

(30) Priority: 24.01.2025 KR 20250011132
(71) Applicant: SAMSUNG SDI CO., LTD., Yongin-si, Gyeonggi-do 17084 (KR)
(72) Inventor: Kim, Hyeok Joo, 16678 Suwon-si, Gyeonggi-do (KR); Bae, Kwang Soo, 16678 Suwon-si, Gyeonggi-do (KR); Yong, Jun Sun, 16678 Suwon-si, Gyeonggi-do (KR); Yoo, Seung Yeol, 16678 Suwon-si, Gyeonggi-do (KR); Kim, Heon Hee, 16678 Suwon-si, Gyeonggi-do (KR); Kim, Duck Hyun, 16678 Suwon-si, Gyeonggi-do (KR); Jang, Woon Suk, 16678 Suwon-si, Gyeonggi-do (KR)
(74) Representative: Meissner Bolte Partnerschaft mbB

(57) **Abstract**

A secondary battery (2) includes a case (100), an electrode assembly (200) inside of the case (100) and including a first electrode (210) and a second electrode (220), a first tab member (240) including a first inner tab member (241) and a first outer tab member (242) extending in a first direction from the first electrode (210), a first terminal (310) protruding outward from the case (100), a first current collector (410) inside of the case (100) and contacting the first terminal, a first inner plate (420) connected to the first current collector (410) and contacting the first inner tab member, the first inner plate (420) has a first thickness in the first direction, and a first outer plate (430) connected to the first current collector (410) and contacting the first outer tab member (242), the first outer plate (430) has a second thickness in the first direction different from the first thickness.

## Description

### BACKGROUND

### 1. Field

The present invention relates to a secondary battery and a battery module including the same.

### 2. Description of Related Art

In general, due to the recent proliferation of electronic devices utilizing batteries, such as mobile phones, notebook computers, electric vehicles, and the like, the demand has increased for secondary batteries having relatively high energy density and relatively high capacity. Accordingly, research and development for improving the performance of a lithium secondary battery are being actively conducted.

A lithium secondary battery may be a battery including a positive electrode and a negative electrode, and including an active material capable of intercalating or deintercalating lithium ions, and an electrolyte solution. Furthermore, the lithium secondary battery may generate energy through oxidation/reduction (redox) reactions when lithium ions are intercalated/deintercalated at the positive and negative electrodes.

The above-described information disclosed in the technology that forms the background of the present invention is only intended to improve understanding of the background of the present invention, and thus may include information that does not constitute the related art.

### SUMMARY

The present invention is directed to a secondary battery and a battery module which is capable of providing uniform heat distribution.

These and other aspects of the present invention will be described or will be apparent from the following description of some embodiments of the present invention.

According to the present invention, there is provided a secondary battery, a secondary battery includes a case, an electrode assembly inside of the case and including a first electrode and a second electrode, a first tab member including a first inner tab member and a first outer tab member extending in a first direction from the first electrode, a first terminal protruding outward from the case, a first current collector inside of the case and contacting the first terminal, a first inner plate connected to the first current collector and contacting the first inner tab member, the first inner plate has a first thickness in the first direction, and a first outer plate connected to the first current collector and contacting the first outer tab member, the first outer plate has a second thickness in the first direction different from the first thickness.

In some embodiments, the first thickness of the first inner plate in the first direction is greater than the second thickness of the first outer plate in the first direction.

The first thickness of the first inner plate may be in a range of 0.2 millimeters (mm) to 2.0 mm.

The second thickness of the first outer plate may be in a range of 0.1 mm to 1.9 mm.

The first inner plate may include a first base plate extending from the first current collector, and a first reinforcement plate on the first base plate and connected to the first base plate.

The secondary battery may include one or more first grooves formed concavely from the first inner plate arranged towards the first inner tab member.

The first inner tab member and the first outer tab member may be at a distance apart from each other in a second direction crossing the first direction, and the first inner plate and the first outer plate may be at a distance apart from each other in the second direction.

The case may include a can including an opening, and a cap plate that seals the opening and support the first terminal, and the first tab member arranged towards the cap plate.

The first current collector may be arranged towards a space between the first inner tab member and the first outer tab member.

The first inner plate and the first outer plate may extend in opposite directions from the first current collector.

The can comprises a first side portion and a second side portion arranged towards each other in the second direction; and

The first side portion may be at a first distance from the first tab member and the second side portion at a second distance from the first tab member, wherein the first distance may be smaller than the second distance.

The first side portion may be at a third distance from the first outer tab member and the first side portion may be at a fourth distance from the first inner tab member, wherein the third distance may be smaller than the fourth distance.

The case may include a can including an opening, and a cap plate that seals the opening and supports the first terminal, and the first tab member may be arranged towards an inner surface of the can.

The cap plate may be at a first distance from the first inner tab member and the cap plate may be at a second distance from the first outer tab member, wherein the first distance may be smaller than the second distance.

The first current collector may be between the electrode assembly and the cap plate.

The first inner plate and the first outer plate may extend in order from the first current collector.

The first length of the first inner plate in the second direction may be greater than a second length of the first outer plate in the second direction.

The first width of the first inner plate in a third direction may be greater than a second width of the first outer plate in the third direction, and the third direction crossing the first direction and the second direction.

The second tab member may include a second inner tab member and a second outer tab member extending in the first direction from the second electrode, a second terminal protruding outward from the case and at a distance from the first terminal, a second current collector inside of the case and contacting the second terminal, a second inner plate connected to the second current collector and contacting the second inner tab member, and a second outer plate connected to the second current collector and contacting the second outer tab member, wherein a third thickness of the second inner plate in the first direction may be different than a fourth thickness of the second outer plate in the first direction.

According to the present invention, there is provided a battery module, a battery module includes a housing, and one or more secondary batteries inside of the housing, wherein each of the one or more secondary batteries includes: a case, an electrode assembly inside the of case and including a first electrode and a second electrode, a first tab member including a first inner tab member and a first outer tab member extending in a first direction from the first electrode, a first terminal protruding outward from the case, a first current collector inside of the case and contacting the first terminal, a first inner plate connected to the first current collector and contacting the first inner tab member, the first inner plate may have a first thickness in the first direction, and a first outer plate connected to the first current collector and contacting the first outer tab member, the first outer plate may have a second thickness in the first direction different from the first thickness.

Other aspects, features, and advantages other than those described above will become apparent from the following detailed description, the appended claims, and the accompanying drawings.

### BRIEF DESCRIPTION OF THE DRAWINGS

The above and other aspects of the present invention will be more clearly understood by describing in detail embodiments thereof with the accompanying drawings, in which:
FIG. 1 is a perspective view schematically illustrating a configuration of a battery module according to some embodiments of the present invention;
FIG. 2 is a perspective view schematically illustrating a configuration of a secondary battery according to some embodiments of the present invention;
FIG. 3 is an exploded perspective view schematically illustrating a configuration of the secondary battery according to some embodiments of the present invention;
FIG. 4 is an exploded perspective view schematic illustrating a configuration of an electrode assembly according to some embodiments of the present invention;
FIG. 5 is an enlarged view schematically illustrating a configuration of a first tab member, a first terminal, and a first connecting member according to some embodiments of the present invention;
FIG. 6 is a cross-section view schematically illustrating a configuration of the first connecting member according to some embodiments of the present invention;
FIG. 7 is a plan view of schematically illustrating a configuration of the first connecting member according to some embodiments of the present invention;
FIG. 8 is an enlarged view schematically illustrating a configuration of a second tab member, a second terminal, and a second connecting member according to some embodiments of the present invention;
FIG. 9 is a front view schematically illustrating a configuration of the second connecting member according to some embodiments of the present invention;
FIG. 10 is a plan view schematically illustrating a configuration of the second connecting member according to some embodiments of the present invention;
FIG. 11 is a exploded perspective view schematically illustrating a configuration of a secondary battery according to some embodiments of the present invention;
FIG. 12 is a cross-sectional view schematically illustrating a configuration of the secondary battery according to some embodiments of the present invention;
FIG. 13 is an exploded perspective view schematically illustrating a configuration of a secondary battery according to some embodiments of the present invention;
FIG. 14 is a plan view schematically illustrating a configuration of the secondary battery according to some embodiments of the present invention;
FIG. 15 is a cross-sectional view schematically illustrating a configuration of a secondary battery according to some embodiments of the present invention;
FIG. 16 is a cross-sectional view schematically illustrating a configuration of a secondary battery according to some embodiments of the present invention;
FIG. 17 is a cross-sectional view schematically illustrating a configuration of a secondary battery according to some embodiments of the present invention;
FIG. 18 is an enlarged view schematically illustrating a configuration of a first connecting member according to some embodiments of the present invention; and
FIG. 19 is an enlarged view schematically illustrating a configuration of a second connecting member according to some embodiments of the present invention.

### DETAILED DESCRIPTION

Herein, some embodiments of the present invention will be described, in further detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term.

The embodiments described in this specification and the configurations shown in the drawings are provided as some example embodiments of the present invention and do not represent all of the technical ideas, aspects, and features of the present invention. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and the present specification, and should not be interpreted in an idealized or overly formal sense, unless expressly so defined herein.

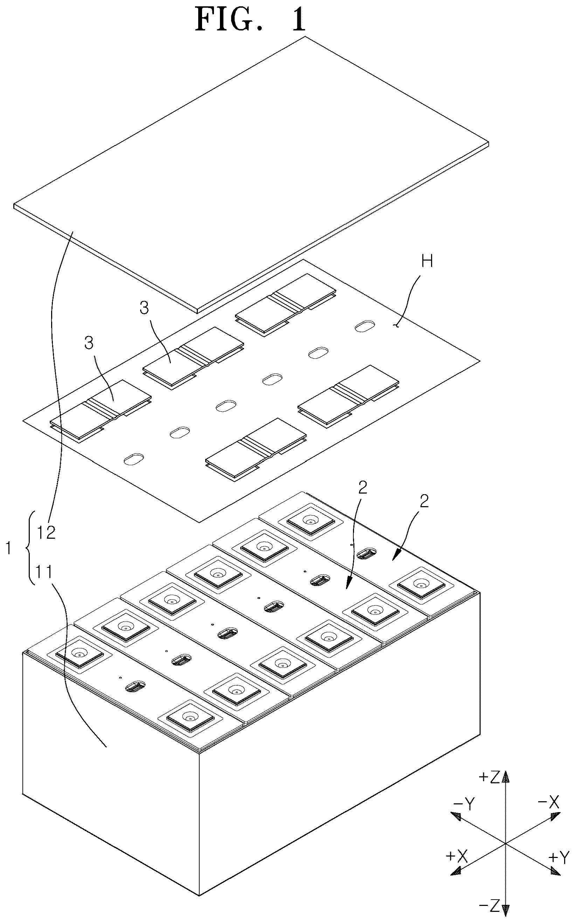

FIG. 1 is a perspective view schematically illustrating a configuration of a battery module according to some embodiments of the present invention.

Referring to FIG. 1, the battery module according to some embodiments may include a housing 1 and a secondary battery 2.

The housing 1 may form (as used herein, "form" may mean "provide," as appropriate) a perimeter surface (e.g., approximate exterior) of the battery module and may provide an aperture (open space) in which the secondary battery 2 may be provided and accommodated therein.

In some embodiments, the housing 1 may include a housing body 11 and a cover 12.

The housing body 11 may be formed to have a geometrical shape that is substantially rectangular (shape of a box) with an open (empty) interior and one or more open sides. A cross-sectional shape of the housing body 11 may not be limited to the rectangular shape shown in FIG. 1 in some embodiments of the present invention, and may be designed to have one or more other geometric shapes as suitable, including, but not limited to: polygonal; circular; oval; and the like.

The cover 12 may be coupled to the housing body 11 and may be used to cover (close) the open interior space of the housing body 11. As an example, the cover 12 may be formed to have a substantially planar and rectangular (e.g., flat plate-like) geometric shape, and may be disposed to face the open side of the housing body 11. In some embodiments, the cover 12 may be fixed to the housing body 11 by utilizing one or more of various types of coupling mechanisms, including but not limited to: bolting; welding; fitting; and the like.

The secondary battery 2 may function as a device (e.g., within a set of battery devices in the battery module structure) that is configured to store and supply power in the battery module. The secondary battery 2 may be disposed inside of the housing 1.

In some embodiments, a plurality secondary batteries 2 (e.g., set of battery devices) may be provided in the battery module of FIG. 1. The plurality of secondary batteries 2 may be arranged in two or more rows, in at least one of a longitudinal direction (length in the x-axis direction of FIG. 1) and a latitudinal direction (width in the y-axis direction of FIG. 1) of the housing 1. In the example configuration of FIG. 1, the plurality of secondary batteries 2 is arranged in six rows in the longitudinal direction (in the x-axis direction) of the housing 1. The plurality of secondary batteries 2 in some embodiments of the present invention are not limited thereto, and may be designed to have one or more forms and arrangements in some embodiments. The plurality of secondary batteries 2 may be disposed parallel to one other. For example, a secondary battery 2 may be arranged with a surface along the length (in the x-axis direction) that is parallel to a surface along the length (in the x-axis direction) of an adjacent secondary battery 2. The number of secondary batteries 2 that are configured in the battery module of FIG. 1 may be selected based (depending) on various aspects related to the configuration of the housing 1, such as size, shape, dimensions, and the like of the housing 1.

The plurality of secondary batteries 2 may be electrically connected by a bus bar 3, in some embodiments.

The bus bar 3, according to some embodiments, may be disposed (e.g., arranged, positioned, or located) between the cover 12 and the secondary battery 2. A plurality of bus bars 3 may be provided in the battery module of FIG. 1. Each of the bus bars 3 may connect at least two (e.g., a pair) of adjacent secondary batteries 2 in series or parallel.

The bus bar 3 may be formed of electrically conductive materials such as copper, aluminum, nickel, and the like. The bus bar 3 in the present invention is not limited to the configuration of FIG. 1, and may be designed to have any suitable form and arrangement that may electrically connect adjacent secondary batteries 2, in some embodiments.

In some embodiments, the plurality of bus bars 3 may be supported inside of the housing 1 by a bus bar holder H.

The bus bar holder H, according to some embodiments, may be formed to have a substantially planar and rectangular (e.g., flat plate-like) geometric shape. The bus bar holder H may be disposed between the cover 12 and the secondary battery 2. The bus bar 3 may be fixed to the bus bar holder H by utilizing one or more of various types of coupling mechanisms, including but not limited to: fitting; bolting; injection joining; and the like. The bus bar holder H may be configured to include an electrically insulating material, such as an electrically insulating polymer compound material.

Hereinafter, a secondary battery 2 according to some embodiments of the present invention will be described.

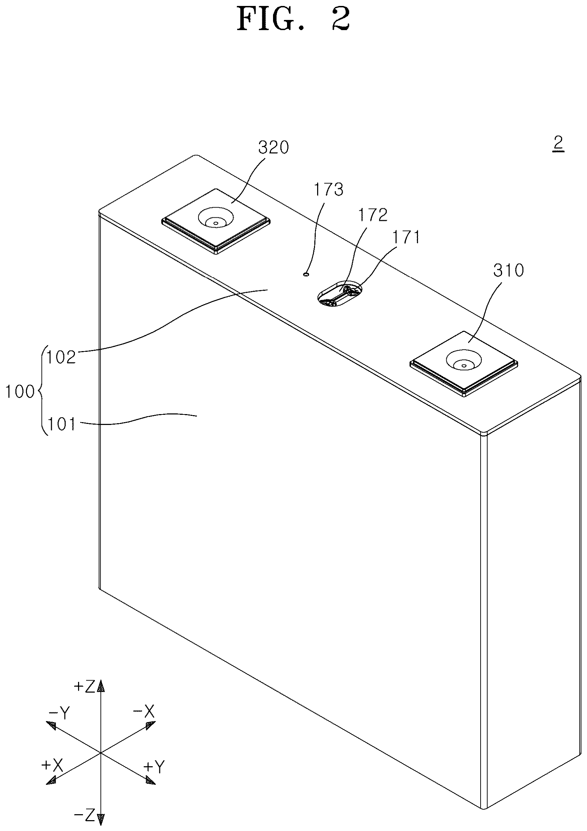

FIG. 2 is a perspective view schematically illustrating a configuration of a secondary battery 2, according to some embodiments of the present invention.

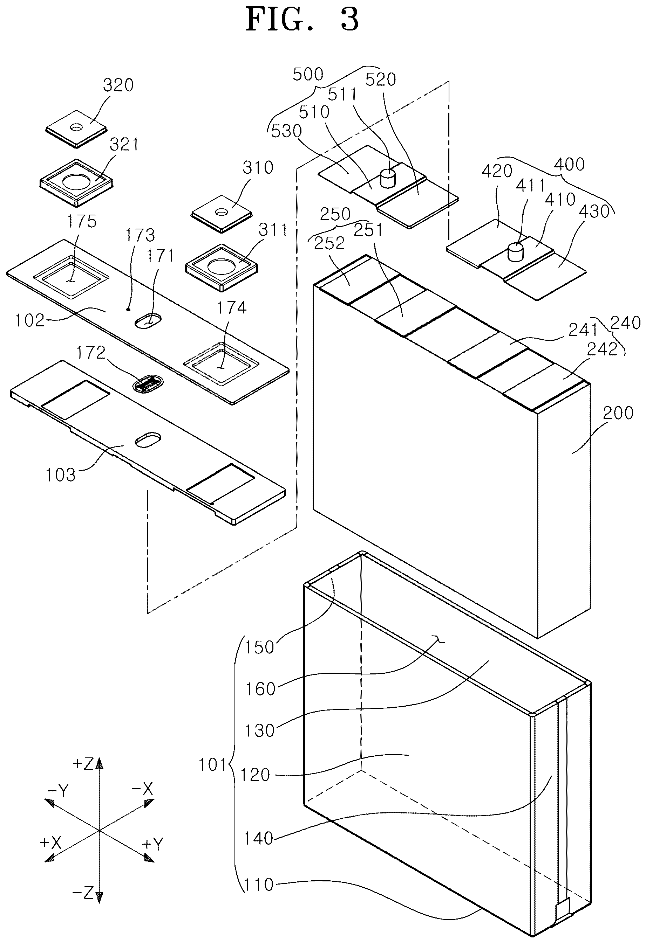

FIG. 3 is a perspective view schematically illustrating the example configuration (shown in FIG. 2) of the secondary battery, according to some embodiments of the present invention.

Hereinafter, an example in which the secondary battery 2 may be a prismatic lithium-ion secondary battery will be described. However, the present invention is not limited thereto, and the secondary battery 2 may be a lithium polymer battery or a cylindrical battery in some embodiments.

For purposes of discussion, as used herein a "first direction" as described below may refer to a direction along the height (vertical in the z-axis direction in FIGS. 2 and 3), a "second direction" as described below may refer to a direction along the length (horizontal in the y-axis direction), and a "third direction" as described below may refer to direction along the width (horizontal in the x-axis direction).

Referring to FIGS. 2 and 3, the secondary battery 2 according to some embodiments of the present invention may include a case 100, an electrode assembly 200, a first tab member 240, a first terminal 310, and a first connecting member 400.

The case 100 may form a perimeter surface (approximate exterior) of the secondary battery 2 and may provide an aperture (e.g., open space) in which the electrode assembly 200 is provided and accommodated therein.

The case 100, according to some embodiments, may include a can 101 and a cap plate 102.

The can 101 may provide an open space to accommodate the electrode assembly 200.

The can 101, according to some embodiments, may include a bottom portion 110, a front surface portion (as used herein "portion" may mean "section," "side" or "part," as appropriate) 120, a rear surface portion 130, a first side portion 140, and a second side portion 150.

The bottom portion 110 may form an exterior surface of a lower side (in FIG. 3) of the can 101. The bottom portion 110, according to some embodiments, may have the form of a rectangular plate. The bottom portion 110 may be arranged (e.g., seated) on a bottom surface of the housing body 11.

The front surface portion 120, the rear surface portion 130, the first side portion 140, and the second side portion 150 may form an exterior (e.g., outer surface) of the case 100.

The front surface portion 120, the rear surface portion 130, the first side portion 140, and the second side portion 150 may have the form of a plate extending in the first direction from an edge of the bottom portion 110. The front surface portion 120, the rear surface portion 130, the first side portion 140, and the second side portion 150 may be arranged around the perimeter of the bottom portion 110 and forming an exterior disposed to surround the area (e.g., open space) above the bottom portion 110. The front surface portion 120, the rear surface portion 130, the first side portion 140, and the second side portion 150 may be disposed to form a three-dimensional geometrical shape that is substantially rectangular (cross-sectional shape).

The front surface portion 120 and the rear surface portion 130 may be arranged on opposite sides (disposed to face each other) in the third direction. The rear surface portion 130 may be disposed to be spaced a predetermined (as used herein, "predetermined" may mean "set" as appropriate) distance (or space) apart from the front surface portion 120 in the third direction. The front surface portion 120 and the rear surface portion 130 may be disposed parallel to each other. In some embodiments, a size (e.g., dimensions, area) of the front surface portion 120 and the rear surface portion 130 may be substantially the same.

The first side portion 140 and the second side portion 150 may be arranged on opposite sides (disposed to face each other) in the second direction. The second side portion 150 may be disposed at a set or predetermined distance (e.g., spaced) apart from the first side portion 140 in the second direction. The first side portion 140 and the second side portion 150 may be disposed parallel to each other. In some embodiments, a size (e.g., dimensions, area) of the first side portion 140 and the second side portion 150 may be substantially the same. The size of the first side portion 140 and the second side portion 150 may be relatively smaller than the size of the front surface portion 120 and the rear surface portion 130.

The can 101 may further include an opening 160. The opening 160 according to some embodiments may refer to an open space within (e.g., surrounded by) the top (e.g., upper end) portions of the front surface portion 120, the rear surface portion 130, the first side portion 140, and the second side portion 150. The opening 160 may interconnect the spaces inside and outside of the can 101 (i.e., form an open space from inside of the can 101 and extending to an upper area outside of the can 101).

Accordingly, the case 100 may be formed to have a three-dimensional geometric shape that is substantially rectangular parallelepiped (e.g., box) with an open upper side.

The cap plate 102 may be coupled to the can 101, and may be arranged on top of the can 101 to close (e.g., seal) the opening 160 of the can 101.

The cap plate 102, according to some embodiments, may be formed to have the form of a flat plate. The cap plate 102 may be arranged at the top portion (disposed in the opening 160) of the can 101. The cap plate 102 may be disposed facing (as used herein "facing" may mean "facing towards" or "to face" or "arranged in a direction towards" as appropriate) the bottom portion 110 of the can 101 in the first direction. In some embodiments, the cap plate 102 may be disposed at a position that is spaced a predetermined distance apart from the bottom portion 110 in the first direction. The cap plate 102 and the bottom portion 110 may be disposed parallel to each other.

The cap plate 102 may be coupled to (e.g., seated on) an upper end portion of the can 101, for example, being position at the top (e.g., upper end) portions of the front surface portion 120, the rear surface portion 130, the first side portion 140, and the second side portion 150. The cap plate 102 may be coupled to the can 101 by utilizing one or more of various types of coupling mechanisms, including but not limited to: welding; bolting; fitting; and the like.

A vent hole 171 and a vent 172 may be formed in the cap plate 102 according to some embodiments.

The vent hole 171 may be formed to have a substantially circular (e.g., hole) geometric shape, and forming a hole that vertically passes through the cap plate 102 (e.g., boring through the width) in the first direction. The vent hole 171 may function as a structure that provides an opening (e.g., path) for flames, gas, smoke, and the like that may be formed inside of the can 101 to be released (e.g., discharged) to the outside of the can 101, for example when a thermal runaway of the secondary battery 2 occurs due to overcurrent and the like. In some embodiments, a cross-sectional shape of the vent hole 171 may be designed to have one or more various geometric shapes, including but not limited to: an oval; a circle; a polygon; and the like.

The vent 172 may be arranged (e.g., installed) in the vent hole 171, and may be opened and closed based on (as used herein "based" may mean "in response to," as appropriate) changes in the internal pressure of the can 101. For example, during operation (e.g., normal operation) of the secondary battery 2, the vent 172 may close the vent hole 171 to prevent an electrolyte (e.g., conductive substances, and the like) inside of the can 101 from leaking out of the can 101, or substantially reduce the likelihood thereof; and to prevent or reduce moisture, foreign substances (with respect to the secondary battery 2), and the like from entering the can 101. For example, when thermal runaway of the secondary battery 2 occurs, the vent 172 may open the vent hole 171 to provide an open path for (e.g., guide) flames, gas, smoke, and the like that may be formed inside the can 101 to be released (or discharged) to the outside of the can 101.

The vent 172 may be formed to have a plate-like shape. The vent 172 may be fixed to the cap plate 102 by utilizing one or more of various types of coupling mechanisms, including but not limited to: welding; bolting; fitting, and the like. The vent 172 may be disposed inside of the vent hole 171, or may be disposed on an upper side (or a lower side) of the cap plate 102 to face the vent hole 171 in the first direction.

A thickness of the vent 172 (parallel to the first direction) may be relatively smaller than a thickness of the cap plate 102, in some embodiments. Accordingly, the vent 172 may be configured to open (or rupture) when the internal pressure of the can 101 increases to be approximately equal to a set pressure value. The vent 172 may include a notch that is formed to be rounded inward (e.g., concave) in the vent 172, such that the vent 172 can open when the internal pressure of the can 101 increases to be approximately equal to a set (e.g., determined) pressure value.

The cap plate 102 may have an electrolyte inlet 173 that forms an opening passing through the cap plate 102, such that the electrolyte inlet 173 allows a sealing plug to be arranged (e.g., installed) therein. The electrolyte inlet 173 may be disposed to be spaced a predetermined distance apart from the vent hole 171 in the second direction (or in an opposite direction of the second direction).

The electrode assembly 200 may function as a structure that performs power charging and discharging operations of power in the secondary battery 2. In some embodiments, the electrode assembly 200 may be accommodated inside the can 101, for example the electrode assembly 200 being arranged therein.

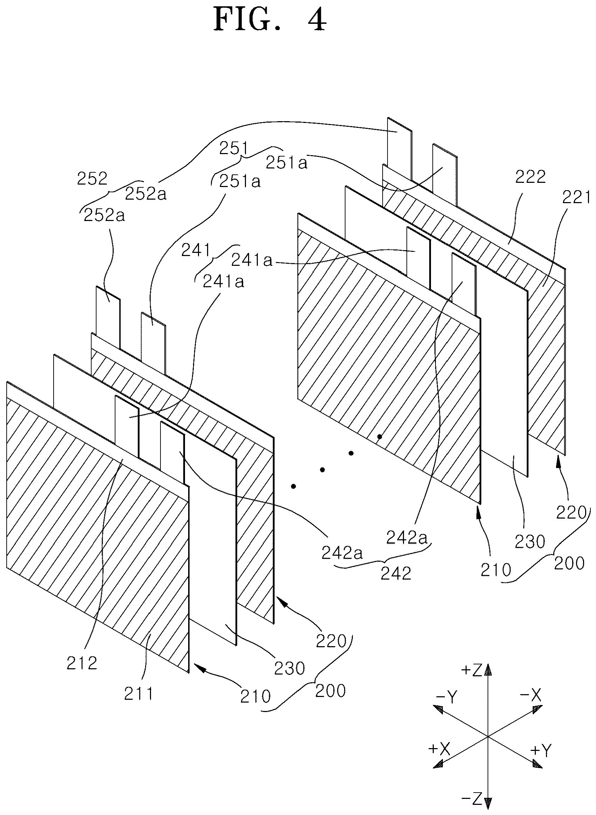

FIG. 4 is an exploded perspective view schematically illustrating a configuration of an electrode assembly according to some embodiments of the present invention.

Referring to FIGS. 2 to 4, the electrode assembly 200 according to the present embodiment may include a first electrode 210, a second electrode 220, and a separator 230 disposed between the first electrode 210 and the second electrode 220. A plurality of first electrodes 210, separators 230, and second electrodes 220 may be provided.

Hereinafter, the electrode assembly 200 having a stacked form in which the plurality of first electrodes 210, the separators 230, and the second electrodes 220 may be sequentially stacked (as used herein "sequentially stacked" may mean "arranged in an order on top of" as appropriate) in the third direction will be described as an example. However, the electrode assembly 200 of the present invention is not limited thereto, and may be configured having various forms in some embodiments. For example, the electrode assembly 200 may be configured to include the first electrode 210, the separator 230, and the second electrode 220 stacked and wound in a clockwise (or counterclockwise) direction around a winding axis.

The first electrode 210 may function as either a positive electrode or a negative electrode of the electrode assembly 200. Hereinafter, for purposes of discussion, the first electrode 210 will be described as a positive electrode of the electrode assembly 200 in the example configuration of FIGS. 2 to 4. However, the first electrode 210 in some embodiments of the present invention is not limited thereto, and may also function as a negative electrode of the electrode assembly 200.The first electrode 210 according to the present embodiment may be formed as a foil including a metal material, such as aluminum, an aluminum alloy, and the like. The dimensions and aspects of the first electrode 210 (e.g., type, size, shape, and the like) are not limited in the present invention, and may be configured as a conductive structure as generally suitable (e.g., does not cause chemical changes in the secondary battery 2). A cross-sectional shape of the first electrode 210 may not be limited to the rectangular shape shown in FIG. 4 and may be designed to have various other geometric shapes as may be suitable.

A plurality of first electrodes 210 may be provided in the electrode assembly 200, in some embodiments. The plurality of first electrodes 210 may be arranged in the third direction between the front surface portion 120 and the rear surface portion 130 of the case 100. The number of first electrodes 210 may be selected based (depending) on various aspects related to the secondary battery 2, such as charging capacity, and the like.

A first active material layer 211 may be arranged on (e.g., applied to) at least a portion of the first electrode 210. The first active material layer 211 may be applied to both surfaces (e.g., opposite surfaces) of the first electrode 210or may be applied to only one surface of the first electrode 210.

In some embodiments, when the first electrode 210 functions as a positive electrode, the first active material layer 211 may include a positive electrode active material.

The positive electrode active material may be a compound capable of reversible intercalation and deintercalation of lithium (e.g., a lithiated intercalation compound). In some embodiments, when the first active material layer 211 includes the positive electrode active material, the composite oxides of a metal may be one or more of (e.g., selected from the group consisting of) cobalt, manganese, nickel, iron, and a combination thereof. In some embodiments, the positive electrode active material may include lithium.

For example, the positive electrode active material may include one or more lithium-based chemical compounds, including, but not limited to: lithium -iron-phosphorus oxide (LiFePO4, LFP); lithium-manganese-iron-phosphorus oxide (LiMnFePO4, LMFP); lithium-nickel-cobalt-manganese oxide (LiNixCoyMnzO2, NCM); and the like. The positive electrode active material may include varied amounts and combinations of the above-mentioned lithium-based chemical compounds. A total amount of lithium-based chemical compounds that may be comprised in the positive electrode active material may be represented mathematically as, 0 < x < 1, 0 < y <1, 0 < z < 1, and x+y+z = 1 (where x, y, z = amount/percentage of a lithium-based chemical compound). For example, the positive electrode active material may include one, two, or all of the above-mentioned lithium-based chemical compounds, and any combination thereof as suitable.

In some embodiments, the first active material layer 211 may further include a positive electrode conductive material.

The positive electrode conductive material is used to impart conductivity to the first active material layer 211, and an electronically conductive material that is generally suitable (e.g., does not cause a chemical change) may be used as the positive electrode conductive material. Examples of the positive electrode conductive material may include, but are not limited to: carbon-based materials such as natural graphite, artificial graphite, carbon black, acetylene black, Ketjen black, carbon fibers, carbon nanofibers, and carbon nanotubes; metal-based materials in the form of a metal powder; metal fibers including copper, nickel, aluminum, silver, and the like; conductive polymers such as polyphenylene derivatives, or a combination (mixture) thereof.

In some embodiments, the first active material layer 211 may further include a positive electrode binder.

The positive electrode binder may be configured for bonding the particles that are comprised in the positive electrode active material to each other, and bond (e.g., attach) the positive electrode active material to the first electrode 211.

Examples of the positive electrode binder may include, but are not limited to: a non-aqueous binder; an aqueous binder; a dry binder; or any combination thereof.

The non-aqueous binder may include: polyvinyl chloride; carboxylated polyvinyl chloride; polyvinyl fluoride; an ethylene propylene copolymer; polystyrene; polyurethane; polytetrafluoroethylene; polyvinylidene fluoride; polyethylene; polypropylene; polyamideimide; polyimide; or any combination thereof.

The aqueous binder may be one or more of (e.g., selected from among): styrene-butadiene rubber; (meth)acrylated styrene-butadiene rubber; (meth)acrylonitrile-butadiene rubber; (meth)acrylic rubber; butyl rubber; a fluoroelastomer; polyethylene oxide; polyvinylpyrrolidone; polyepichlorohydrin; polyphosphazene; poly(meth)acrylonitrile; an ethylene propylene diene copolymer; polyvinylpyridine; chlorosulfonated polyethylene; latex; a polyester resin; a (meth)acrylic resin; a phenol resin; an epoxy resin; polyvinyl alcohol; and any combination thereof.

In some embodiments, when the aqueous binder is used as the positive electrode binder, the aqueous binder may further include a cellulose series compound capable of providing viscosity. The cellulose series compound that may be used for the positive electrode binder may be one or more of: carboxymethyl cellulose; hydroxypropylmethyl cellulose; methyl cellulose; an alkali metal salt; and any combination thereof. The alkali metal may be sodium (Na), potassium (K), lithium (Li), and the like.

The dry binder may be a polymer material capable of beingfiberized. For example, the polymer material may be one or more of: polytetrafluoroethylene; polyvinylidene fluoride; a polyvinylidene fluoride-hexafluoropropylene copolymer; polyethylene oxide; and a combination thereof.

The first electrode 210 may include a first uncoated portion 212 which may not include the first active material layer 211 (e.g., the first active material layer 211 may not be applied). The first uncoated portion 212 may be disposed in a top (e.g., upper end) area of the first electrode 210, which is arranged to face the opening 160 inside of the case 100. However, the first uncoated portion 212 is not limited thereto in the present invention, and may be formed utilizing various configurations in some embodiments. For example, the first uncoated portion 212 may be formed over an edge area (e.g., entire edge) of the first electrode 210.

The second electrode 220 may function as (the other of) a positive electrode or a negative electrode of the electrode assembly 200. Hereinafter, for purposes of discussion, the second electrode 220 will be described as a negative electrode of the electrode assembly 200 as an example. However, the second electrode 220 is not limited thereto, and may function as a positive electrode of the electrode assembly 200.

A plurality of second electrodes 220 may be provided in the electrode assembly 200, in some embodiments. The plurality of second electrodes 220 may be arranged in the third direction between the front surface portion 120 and the rear surface portion 130 of the can 101. The first electrode 210 and the second electrode 220 may be alternately disposed in the third direction. The second electrode 220 may be spaced a predetermined distance apart from the first electrode 210 in the third direction.

The second electrode 220 may be formed as a foil including a metal material, including but not limited to: copper; copper alloy; nickel; nickel alloy; and the like. The dimensions and aspects of the second electrode 220 (e.g., type, size, shape, and the like) are not limited in the present invention, and may be configured as a conductive structure as generally suitable (e.g., does not cause chemical changes in the secondary battery 2). A cross-sectional shape of the second electrode 220 may not be limited to the rectangular shape shown in FIG. 4 and may be designed to have various other geometric shapes as suitable.

A second active material layer 221 may be applied to at least a portion of the second electrode 220. The second active material layer 221 may be applied to both surfaces of the second electrode 220. In some embodiments, the second active material layer 221 may be applied to only one surface of the second electrode 220.

In some embodiments, when the second electrode 220 functions as a negative electrode, the second active material layer 221 may include a negative electrode active material.

The negative electrode active material may include one or more of: a material capable of reversible intercalation/deintercalation of lithium ions; a lithium metal; a lithium metal alloy; a material capable of doping and dedoping of lithium, a transition metal oxide; and the like.

The material capable of reversibly intercalating/deintercalating lithium ions may be a carbon-based negative electrode active material. Examples of carbon-based negative electrode active material according to the present invention may include, but are not limited to: crystalline carbon; amorphous carbon; or any combination thereof. Examples of the crystalline carbon according to the present invention may include, but are not limited to: graphite, such as amorphous, plate-like, flake-like, spherical, or fiber-like natural graphite; artificial graphite; and the like. Examples of the amorphous carbon according to the present invention may include, but are not limited to: soft carbon; hard carbon; mesophase pitch carbide; calcined coke; and the like.

In some embodiments, the lithium metal alloy that is used may be an alloy of lithium and a metal including one or more of (e.g., selected from among): sodium (Na); potassium (K); rubidium (Rb); cesium (Cs); francium (Fr); beryllium (Be); magnesium (Mg); calcium (Ca); strontium (Sr); silicon (Si); antimony (Sb); lead (Pb); Indium (In); zinc (Zn); barium (Ba); radium (Ra); germanium (Ge); aluminum (Al); tin (Sn); and the like.

In some embodiments, the material capable of doping anddedoping of lithium that is used may be a Si-based negative electrode active material or a Sn-based negative electrode active material. The Si-based negative electrode active material may include, but is not limited to: silicon; a silicon-carbon composite; SiOx (where 0 < x ≤ 2); a Si-Q alloy (where Q is selected from an alkali metal, an alkaline earth metal, a Group 13 element, a Group 14 element (not including Si), a Group 15 element, a Group 16 element, a transition metal, a rare earth element, and any combination thereof)); or any combination thereof. The Sn-based negative electrode active material may include, but is not limited to: Sn; SnOx (where 0 < x ≤ 2, e.g., SnO2); a Sn-based alloy; or any combination thereof.

The silicon-carbon composite may be a composite of silicon and amorphous carbon. In some embodiments, the silicon-carbon composite may be in the form of silicon particles and amorphous carbon that may be coated on surfaces of the silicon particles. For example, the silicon-carbon composite may include a secondary particle (core) in which primary silicon particles may be aggregated, and an amorphous carbon coating layer (shell) that may be located on a surface of the secondary particle. The amorphous carbon may be located between the primary silicon particles, for example, so that the primary silicon particles may be coated with amorphous carbon. The secondary particles may be dispersed in an amorphous carbon matrix.

In some embodiments, the silicon-carbon composite may include crystalline carbon. For example, the silicon-carbon composite may include a core including crystalline carbon and silicon particles, and an amorphous carbon coating layer that is located on the surface of the core.

The Si-based negative electrode active material or the Sn-based negative electrode active material may be used with (e.g., in combination with) a carbon-based negative electrode active material, in some embodiments.

In some embodiments, the second active material layer 221 may include a negative electrode conductive material and a negative electrode binder.

The negative electrode conductive material may be used to provide conductivity to the second active material layer 221, and an electronically conductive material that is generally suitable (e.g., does not cause a chemical change) may be used as the negative electrode conductive material. Examples of the negative electrode conductive material according to the present invention may include, but are not limited to: carbon-based materials, such as natural graphite, artificial graphite, carbon black, acetylene black, Ketjen black, carbon fibers, carbon nanofibers, and carbon nanotubes; metal-based materials in the form of a metal powder or metal fibers including copper, nickel, aluminum, silver, and the like; conductive polymers such as polyphenylene derivatives; or any mixture thereof.

The negative electrode binder may bond (or attach) particles that comprise the negative electrode active material, and bonding the negative electrode active material to the second electrode 220.

Examples of the negative electrode binder according to the present invention may include, but are not limited to: a non-aqueous binder; an aqueous binder; a dry binder; or any combination thereof.

The non-aqueous binder may include, but is not limited to: polyvinyl chloride; carboxylated polyvinyl chloride; polyvinyl fluoride; an ethylene propylene copolymer; polystyrene; polyurethane; polytetrafluoroethylene; polyvinylidene fluoride; polyethylene; polypropylene; polyamideimide; polyimide; or any combination thereof.

The aqueous binder may be one or more of (e.g., selected from among): styrene-butadiene rubber; (meth)acrylated styrene-butadiene rubber; (meth)acrylonitrile-butadiene rubber; (meth)acrylic rubber; butyl rubber; a fluoroelastomer; polyethylene oxide; polyvinylpyrrolidone; polyepichlorohydrin; polyphosphazene; poly(meth)acrylonitrile; an ethylene propylene diene copolymer; polyvinylpyridine; chlorosulfonated polyethylene; latex; a polyester resin; a (meth)acrylic resin; a phenol resin; an epoxy resin; polyvinyl alcohol; and any combination thereof.

In some embodiments, when the aqueous binder is used as the negative electrode binder, the aqueous binder may include a cellulose series compound capable of providing viscosity. The cellulose series compound that may be used for the negative electrode binder may be one or more of: carboxymethyl cellulose; hydroxypropylmethyl cellulose; methyl cellulose; an alkali metal salt; and any combination thereof (may be mixed and used). The alkali metal may be Na, K, or Li.

The dry binder may be a polymer material capable of being fiberized. For example, the polymer material may be one or more of: polytetrafluoroethylene; polyvinylidene fluoride; a polyvinylidene fluoride-hexafluoropropylene copolymer; polyethylene oxide; or any combination thereof.

The second electrode 220 may include a second uncoated portion 222 which may not include the second active material layer 221 (e.g., the second active material layer 221 may not be applied). The second uncoated portion 222 may be disposed in a top (e.g., upper end) area of the second electrode 220, which may be disposed to face the opening 160 inside of the can 101. However, the second uncoated portion 222 is not limited thereto in the present invention, and may be formed utilizing various configurations in some embodiments. For example, the second uncoated portion 222 may be formed over an edge area (e.g., entire edge) of the second electrode 220, in some embodiments.

The separator 230 may be disposed between the first electrode 210 and the second electrode 220. The separator 230 may perform the function of preventing a short circuit between the first electrode 210 and the second electrode 220, while allowing the movement of lithium ions between the first electrode 210 and the second electrode 220.

The separator 230 may be disposed around (e.g., to entirely surround) the surface area of the electrode assembly 200. Accordingly, the separator 230 may prevent the first electrode 210 and the second electrode 220 from being exposed to the outside of the electrode assembly 200, or substantially reduce the likelihood thereof.

The separator 230 may be formed (as used herein "formed" may mean "made of" as appropriate) utilizing polyethylene, polypropylene, polyvinylidene fluoride, a multilayer film (of two or more layers thereof), and the like. In some embodiments, the separator 230 may be formed utilizing a mixed multilayer film, for example forming a two-layer separator of polyethylene/polypropylene, forming a three-layer separator of polyethylene/polypropylene/polyethylene, or a forming a three-layer separator of polypropylene/polyethylene/polypropylene.

The separator 230 may include a porous substrate and a coating layer including an organic material, an inorganic material, or any combination thereof. In some embodiments, the coating layer may be positioned on a surface or both surfaces of the porous substrate.

The porous substrate may be a polymer film formed utilizing one or more polymers including (e.g., selected from among): polyolefins such as polyethylene and polypropylene; polyesters such as polyethylene terephthalate and polybutylene terephthalate; polyacetal; polyamide; polyimide; polycarbonate; polyether ketone; polyarylether ketone; polyetherimide; polyamideimide; polybenzimidazole; polyether sulfone; polyphenylene oxide; a cyclic olefin copolymer; polyphenylene sulfide; polyethylene naphthalate; glass fiber; Teflon; polytetrafluoroethylene; a copolymer; and any combination thereof (or mixture of two or more of the above materials).

The organic material may include a polyvinylidene fluoride-based polymer or a (meth)acrylic polymer.

The inorganic material may include one or more inorganic particles including (e.g., selected from among): Al2O3; SiO2; TiO2; SnO2; CeO2; MgO; NiO; CaO; GaO; ZnO; ZrO2; Y2O3; SrTiO3; BaTiO3; Mg(OH)2; boehmite; , and any combination thereof. Some embodiments of the present invention are not limited thereto, and the inorganic material may be formed utilizing other materials and particles as suitable.

An insulating plate 103 may be disposed between the cap plate 102 and the electrode assembly 200 in some embodiments, for example the configuration in FIG. 3. The insulating plate 103 may insulate the cap plate 102 and the electrode assembly 200 to prevent or reduce contact (e.g., direct contact) between the cap plate 102 and the electrode assembly 200. The insulating plate 103 may fix a position of the electrode assembly 200 inside of the can 101. The insulating plate 103 may prevent the electrode assembly 200 from being damaged when the cap plate 102 may be deformed (e.g., pushed toward the inside of the can 101), for example due to external impacts or the like.

The insulating plate 103 may be disposed to face the electrode assembly 200 in the first direction inside of the can 101, in some embodiments, for example the configuration in FIG. 3. For example, the electrode assembly 200, the insulating plate 103, and the cap plate 102 may be sequentially (as used herein "sequentially" may mean "in an order" as appropriate) disposed in the first direction. The insulating plate 103 may be fixed to an inner surface of the can 101 by utilizing one or more various types of coupling mechanisms, including, but not limited to: fitting; welding; bolting; adhesion; and the like. The insulating plate 103 may be formed utilizing an insulating material, including, but not limited to: polyethylene (PE); polypropylene (PP); polyethylene terephthalate (PET); rubber; or the like.

The first tab member 240 may be coupled to the first electrode 210 and may extend (e.g., protrude outward) from the electrode assembly 200. In some embodiments, when the first electrode 210 is configured as a positive electrode, the first tab member 240 may function as a positive electrode tab of the secondary battery 2. However, the first tab member 240 is not limited thereto in some embodiments of the present invention. For example, in some embodiments, , and when the first electrode 210 is a negative electrode, the first tab member 240 may function as a negative electrode tab of the secondary battery 2.

In some embodiments, for example the configuration of FIG. 3, a distance from the first side portion 140 to the first tab member 240 may be relatively smaller than a distance from the second side portion 150 to the first tab member 240. For example, the first tab member 240 may be disposed relatively closer to the first side portion 140 than to the second side portion 150, based on a center portion of the electrode assembly 200 facing the vent 172 inside of the can 101.

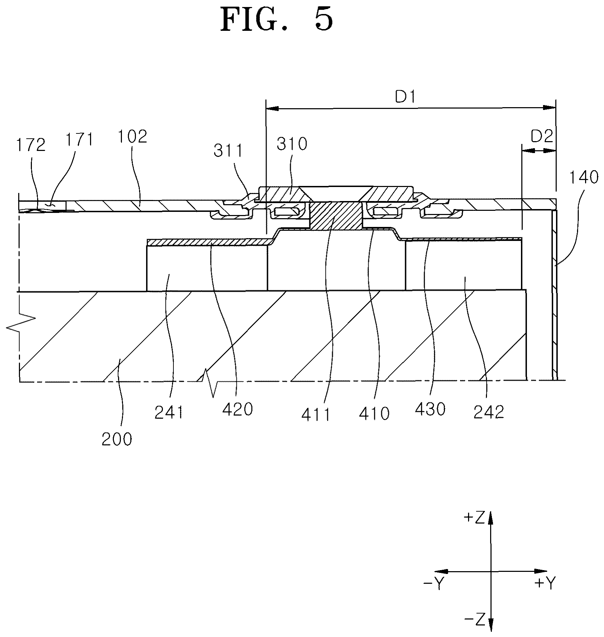

FIG. 5 is an enlarged view schematically illustrating a configuration of a first tab member, a first terminal, and a first connecting member according to some embodiments of the present invention, for example in the configuration of FIG. 3. In FIG. 5, the insulating plate 103 may not be provided for convenience of description.

Referring to FIGS. 2 to 5, the first tab member 240 may include a first inner tab member 241 and a first outer tab member 242.

The first inner tab member 241 and the first outer tab member 242 may extend in the first direction from the first electrode 210. As an example, the first inner tab member 241 and the first outer tab member 242 may extend toward the cap plate 102 inside of the can 101.

The first inner tab member 241 and the first outer tab member 242 may be spaced apart from each other in the second direction. In some embodiments, a distance D2 from the first side portion 140 to the first outer tab member 242 may be relatively smaller than a distance D1 from the first side portion 140 to the first inner tab member 241. Accordingly, the first outer tab member 242 and the first inner tab member 241 may be sequentially disposed from the first side portion 140 in the second direction.

The first inner tab member 241 may include a plurality of first inner tabs 241a in some embodiments, for example the configuration in FIG. 4.

The first inner tab 241a may be formed as a foil extending in the first direction from the first uncoated portion 212 of the first electrode 210. The first inner tab 241a may be formed to have a geometric shape that is substantially rectangular. However, the first inner tab 241a is not limited thereto in some embodiments of the present invention, and may be configured to have a form including one or more various shapes as suitable.

The first inner tab 241a may be formed (e.g., integrally formed) as a structure with the first electrode 210. For example, the first inner tab 241a may be a portion of (e.g., the remaining area of) the first uncoated portion 212 that may be formed from a portion of the first uncoated portion 212 being cut or removed by notching (processing) and the like. In some embodiments, the first inner tab 241a may be formed (e.g., manufactured) separately from the first electrode 210 and then connected to the first uncoated portion 212, for example by welding and the like. A material that may be used for forming the first inner tab 241a may be substantially the same as the material of the first electrode 210.

The number of first inner tabs 241a may be substantially the same as the number of first electrodes 210. One or more of (e.g., each of) the first inner tabs 241 a may individually extend from the first uncoated portion 212 of a different first electrode 210. The plurality of first inner tabs 241a may be stacked in the third direction. The plurality of first inner tabs 241a may be disposed parallel to each other. Accordingly, the first inner tab member 241 may be an assembly of the plurality of first inner tabs 241a stacked in the third direction. In some embodiments, first inner tabs 241a that may be adjacent to one another also may contact each other, and may also be spaced apart from each other, for example by the thickness of the separator 230.

The first outer tab member 242 may include a plurality of first outer tabs 242a, in some embodiments, for example the configuration in FIG. 4.

The first outer tab 242a may be formed as a foil extending in the first direction from the first uncoated portion 212 of the first electrode 210. The first outer tab 242a may be configured to have a geometric shape that is substantially rectangular shape. However, the shape of the first outer tab 242a is not limited thereto in some embodiments of the present invention, and may be designed to have a form including one or more various shapes as appropriate. In some embodiments, aspects (e.g., shape, area, and the like) of the first outer tab 242a may be substantially the same as the first inner tab 241a. In some embodiments, the first outer tab 242a may be configured differently from the first inner tab 241a.

The first outer tab 242a and the first inner tab 241a may be spaced apart from each other in the second direction. As an example, the first outer tab 242a and the first inner tab 241a may be sequentially disposed on the first uncoated portion 212 in the second direction.

The first outer tab 242a may be formed (e.g., integrally formed) as a structure with the first electrode 210. For example, the first outer tab 242a may be a portion of (e.g., the remaining area of) the first uncoated portion 212 that may form from a portion of the first uncoated portion 212 being cut or removed by notching (processing) or the like. In some embodiments, the first outer tab 242a may be formed (e.g., manufactured) separately from the first electrode 210 and then connected to the first uncoated portion 212, for example by welding and the like. A material that be used for forming the first outer tab 242a may be substantially the same as a material of the first electrode 210.

The number of first outer tabs 242a may be substantially the same as the number of first electrodes 210. Each of the first outer tabs 242a may individually extend from the first uncoated portion 212 of a different first electrode 210. The plurality of first outer tabs 242a may be stacked in the third direction. The plurality of first outer tabs 242a may be disposed parallel to each other. Accordingly, the first outer tab member 242 may be an assembly of the plurality of first outer tabs 242a stacked in the third direction. In some embodiments, first outer tabs 242a that may be adjacent to one another also may contact each other, and may also be spaced apart from each other, for example by the thickness of the separator 230.

The first terminal 310 may function as a component providing an electrical connection between the bus bar 3 (and an external power device) and the first electrode 210 of the secondary battery 2.

The first terminal 310 may be formed utilizing electrically conductive materials including, but not limited to: aluminum; nickel; copper; and the like. The first terminal 310 may protrude outward from the cap plate 102. As an example, the first terminal 310 may be disposed on an outer surface of the cap plate 102 facing the space outside the case 100. A surface of the first terminal 310 facing the cap plate 102 may be disposed to face a first terminal hole 174. The first terminal hole 174 may be formed as a bored hole passing through the cap plate 102. The surface of the first terminal 310 may be disposed to face the first tab member 240 through the first terminal hole 174. In some embodiments, for example in the configuration of FIG. 5, the first terminal 310 may be structured to have a substantially rectangular cross-sectional shape. However, the cross-sectional shape of the first terminal 310 is not limited thereto in some embodiments of the present invention, and may be configured to have a form including one or more geometric shapes as suitable, including, but not limited to: circular; oval; polygonal; and the like.

The first terminal 310 may be electrically connected to the first electrode 210 by the first connecting member 400. Accordingly, the first terminal 310 may function as a positive terminal of the secondary battery 2.

The bus bar 3 may be coupled to (e.g., seated on) an upper surface of the first terminal 310. The bus bar 3 and the first terminal 310 may be structurally coupled (as used herein, "structurally coupled" may mean "integrally joined" as appropriate), for example by laser welding and the like.

A first gasket 311 may be disposed between the cap plate 102 and the first terminal 310 in some embodiments, for example the configuration in FIG. 3.

The first gasket 311 may function as a component that may electrically insulate the cap plate 102 and the first terminal 310 from each other.

In some embodiments, the first gasket 311 may be formed utilizing an insulating material, including, but not limited to: polyethylene (PE); polypropylene (PP); polyethylene terephthalate (PET); rubber; and the like. In some embodiments, the top (e.g., upper end) portion of the first gasket 311 may be disposed to surround a bottom (e.g., lower end) portion of the first terminal 310 facing the cap plate 102. A bottom (e.g., lower end) portion of the first gasket 311 may protrude into the space inside of the can 101 through the first terminal hole 174.

The first connecting member 400 may function as a component that provides an electrical connection between the first terminal 310 and the first tab member 240. The first connecting member 400 may be formed utilizing conductive materials such as copper, aluminum, nickel, and the like.

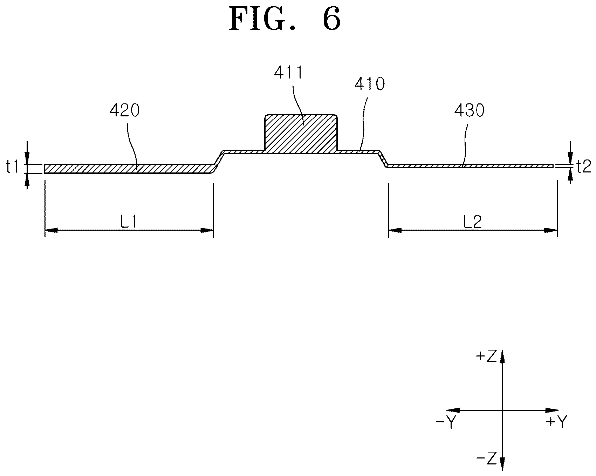

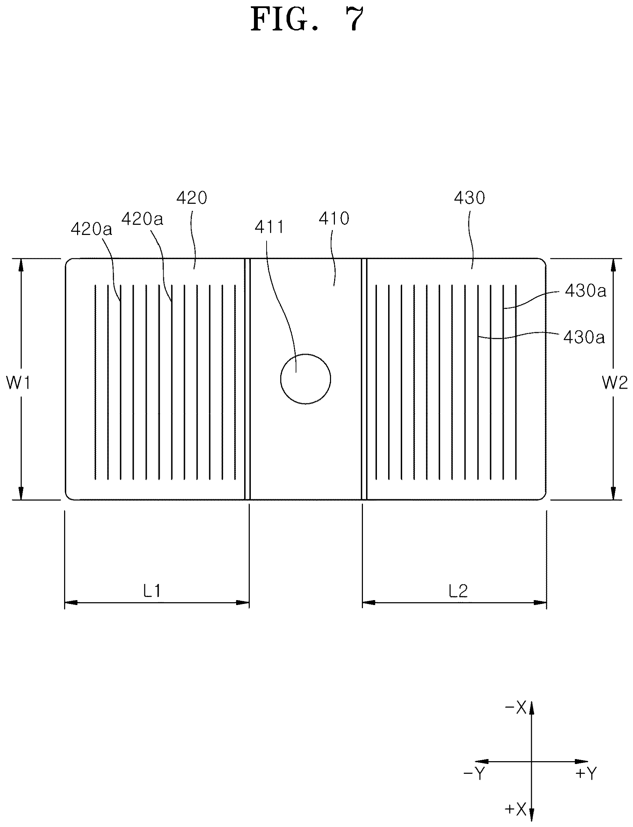

FIG. 6 is a front view schematically illustrating the configuration of the first connecting member 400 according to some embodiments of the present invention, for example the configuration in FIG. 3. FIG. 7 is a plan view schematically illustrating the configuration of the first connecting member 400 according to some embodiments of the present invention, for example the configuration in FIG. 3.

Referring to FIGS. 2 to 7, the first connecting member 400 may include a first current collector 410, a first inner plate 420, and a first outer plate 430.

The first current collector 410 may be disposed inside of the case 100 and may be in contact with the first terminal 310. The first current collector 410 may be electrically connected to the first terminal 310.

The first current collector 410 may be disposed between the first terminal 310 and the electrode assembly 200. The first current collector 410 may have the form of a flat plate and may be disposed normal (e.g., perpendicular) to the first direction. A lower surface of the first current collector 410 may be disposed to face the space between the first inner tab member 241 and the first outer tab member 242. The first inner tab member 241 and the first outer tab member 242, which are spaced apart in the second direction. An upper surface of the first current collector 410 may be disposed to face a lower surface of the first terminal 310 disposed to face the space inside of the can 101. Both end portions (e.g., opposite ends) of the first current collector 410 may be disposed to face the first side portion 140 and the second side portion 150, respectively. In some embodiments, both end portions (e.g., opposite ends) of the first current collector 410 may be extended (e.g., bent) toward the electrode assembly 200.

In some embodiments, the first current collector 410 may include a first boss 411.

The first boss 411 may be formed having a geometric shape that is substantially cylindrical (e.g., a column) extending from the upper surface of the first current collector 410 toward the lower surface of the first terminal 310. The first boss 411 may pass through the first terminal hole 174 of the cap plate 102 and may contact the lower surface of the first terminal 310. The first boss 411 and the first terminal 310 may be structurally coupled, for example by laser welding and the like.

The first inner plate 420 may be connected to the first current collector 410 and may contact the first inner tab member 241, in some embodiments.

The first inner plate 420 may be formed to have a plate-like shape and may extend in the second direction from an end portion of the first current collector 410 disposed towards the second side portion 150. The first inner plate 420 and the first inner tab member 241 may be disposed to face each other in the first direction. In some embodiments, a surface of the first inner plate 420 facing the first inner tab member 241 may contact the first inner tab member 241.

The first inner tab member 241 and the first inner plate 420 may be structurally coupled, for example by laser welding and the like. As an example, a plurality of first inner welding lines 420a connecting the first inner tab member 241 and the first inner plate 420 may be formed on the first inner plate 420.

The first inner welding lines 420a may be portions (e.g., mixtures) of the first inner tab member 241 and the first inner plate 420 that may be melted and hardened, for example by the heat generated during laser welding. The first inner welding lines 420a may extend in the third direction. Accordingly, the first inner welding lines 420a may couple (e.g., integrally connect) the plurality of first inner tabs 241a stacked in the third direction. The plurality of first inner welding lines 420a may be arranged in the second direction on the first inner plate 420.

The first outer plate 430 may be connected to the first current collector 410 and may contact the first outer tab member 242.

The first inner plate 420 and the first outer plate 430 may extend in opposite directions (e.g., on both sides) from the first current collector 410. As an example, the first outer plate 430 may have a plate-like shape extending in the opposite direction (of the second direction) from the other end portion of the first current collector 410 (that is disposed to face the first side portion 140). The first outer plate 430 and the first outer tab member 242 may be disposed to face each other in the first direction. In some embodiments, a surface of the first outer plate 430 facing the first outer tab member 242 may contact the first outer tab member 242.

The first outer tab member 242 and the first outer plate 430 may be structurally coupled, for example by laser welding and the like. As an example, a plurality of first outer welding lines 430a connecting the first outer tab member 242 and the first outer plate 430 may be formed on the first outer plate 430.

The first outer welding lines 430a may be portions (e.g., mixtures) of the first outer tab member 242 and the first outer plate 430 that are melted and hardened, for example by the heat generated during laser welding. The first outer welding lines 430a may extend in the third direction. Accordingly, the first outer welding lines 430a may couple (e.g., integrally connect) the plurality of first outer tabs 242a stacked in the third direction. The plurality of first outer welding lines 430a may be arranged in the second direction on the first outer plate 430.

FIG. 6 depicts that the first inner plate 420 may be configured to have a thickness t1 in the first direction and the first outer plate 430 may be configured to have a thickness t2 the first direction. In some embodiments, the thickness t1 of the first inner plate 420 in the first direction and the thickness t2 of the first outer plate 430 in the first direction may be different from each other.

In some embodiments, the thickness t1 of the first inner plate 420 in the first direction may be relatively larger (e.g., greater) than the thickness t2 of the first outer plate 430 in the first direction. Accordingly, the resistance of the first inner plate 420, which may be located closer to a central region of the electrode assembly 200 (a region in which current may be relatively concentrated compared to an outer region of the electrode assembly 200) may be relatively lower or reduced compared to the resistance of the first outer plate 430. Accordingly, the secondary battery 2 according to some embodiments of the present invention, for example the configuration in FIG. 3, may be configured to prevent or reduce degradation of components, for example due to uneven heat generation. The secondary battery 2 may be configured to maintain the amounts of heat generation in the first inner plate 420 and the first outer plate 430 to be uniform (e.g., substantially the same amounts of heat generation), and thus the lifetime of the secondary battery 2 in the present invention may be maximized or increased.

For example, the thickness t1 of the first inner plate 420 in the first direction may be configured to be in a range from approximately 0.2 millimeters (mm) (or more) to approximately 2.0 mm (or less). For example, the thickness t2 of the first outer plate 430 in the first direction may be in a range from approximately 0.1 mm (or more) to approximately 1.9 mm (or less).

As an example, when the thickness t1 of the first inner plate 420 in the first direction may be relatively lower (e.g., less) than approximately 0.2 mm or the thickness t2 of the first outer plate 430 in the first direction may be relatively lower than approximately 0.1 mm, sufficient or suitable bonding strength may not be provided between the first inner plate 420 and the first inner tab member 241 or the first outer plate 430 and the first outer tab member 242.

An another example, when the thickness t1 of the first inner plate 420 in the first direction may be relatively larger (e.g., greater) than approximately 2.0 mm or the thickness t2 of the first outer plate 430 in the first direction may be relatively larger than approximately 1.9 mm, a difficulty related to joining the first inner plate 420 and the first inner tab member 241 or the first outer plate 430 and the first outer tab member 242 may be substantially increased (e.g., excessively increased).

In some embodiments, for example the configuration of FIGS. 6 and 7, the first inner plate 420 may have a length L1 in the second direction and the first outer plate 430 may have a length L2 in the second direction. In some embodiments, the length L1 of the first inner plate 420 in the second direction and the length L2 of the first outer plate 430 in the second direction may be substantially the same (e.g., equal).

In the configuration of FIG. 7, the first inner plate 420 may have a width W1 in the third direction and the first outer plate 430 may have a width W2 in the third direction. In some embodiments, the width W1 of the first inner plate 420 in the third direction and the width W2 of the first outer plate 430 in the third direction may be substantially the same.

The secondary battery 2 in some embodiments of the present invention, for example the configuration in FIG. 3, may include a second tab member 250, a second terminal 320, and a second connecting member 500.

The second tab member 250 may be coupled to the second electrode 220 and may protrude outward from the electrode assembly 200. In some embodiments, the second electrode 220 may be configured as a negative electrode, and the second tab member 250 may function as a negative electrode tab of the secondary battery 2. However, the second tab member 250 is not limited thereto in some embodiment of the present invention. For example, in some embodiments, when the second electrode 220 may be configured as a positive electrode, the second tab member 250 may function as a positive electrode tab of the secondary battery 2.

In some embodiments, a distance from the second side portion 150 to the second tab member 250 may be relatively smaller than a distance from the first side portion 140 to the second tab member 250. For example, the second tab member 250 may be disposed relatively closer to the second side portion 150 than to the first side portion 140, based on the center portion of the electrode assembly 200 facing the vent 172 inside of the can 101.

The first tab member 240 and the second tab member 250 may be spaced apart from each other in the second direction. The second tab member 250 may be disposed to be spaced a predetermined distance apart from the first tab member 240 in the second direction. The first tab member 240 and the second tab member 250 may be sequentially disposed in the second direction.

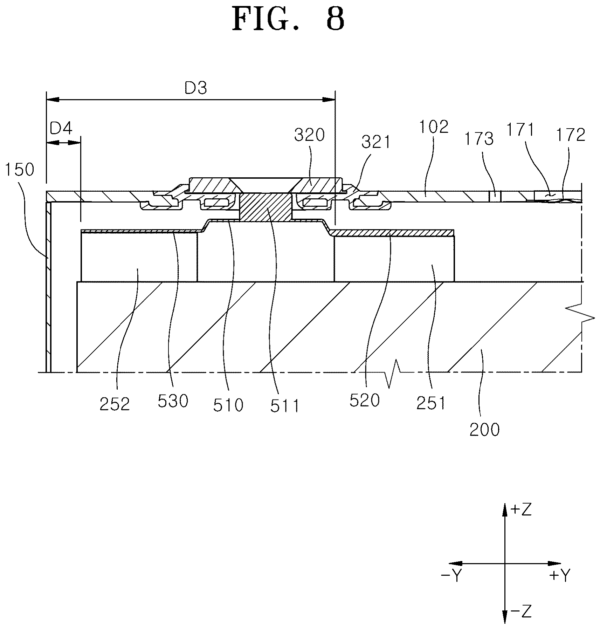

FIG. 8 is an enlarged view schematically illustrating a configuration of a second tab member, a second terminal, and a second connecting member according to some embodiments of the present invention, for example the configuration of FIG. 3. In FIG. 8, the insulating plate 103 may not be provided for convenience of description.

Referring to FIGS. 2 to 4 and 8, the second tab member 250 may include a second inner tab member 251 and a second outer tab member 252.

The second inner tab member 251 the second outer tab member 252 may extend in the first direction from the second electrode 220. As an example, the second inner tab member 251 and the second outer tab member 252 may extend toward the cap plate 102 inside of the can 101.

The second inner tab member 251 and the second outer tab member 252 may be spaced apart from each other in the second direction. A distance D4 from the second side portion 150 to the second outer tab member 252 may be relatively smaller than a distance D3 from the second side portion 150 to the second inner tab member 251. Accordingly, the second outer tab member 252 and the second inner tab member 251 may be sequentially disposed from the second side portion 150 in the opposite direction (of the second direction).

In some embodiments, for example the configuration of FIG. 4, the second inner tab member 251 may include a plurality of second inner tabs 251a.

The second inner tab 251a may be formed as a foil extending in the first direction from the second uncoated portion 222 of the second electrode 220. The second inner tab 251a may be configured to have a geometric shape that is substantially rectangular. However, the shape of the second inner tab 251a is not limited thereto in some embodiments of the present invention, and may be configured to have a form including one or more various shapes as suitable.

The second inner tab 251a may be formed (e.g., integrally formed) with the second electrode 220. For example, the second inner tab 251a may be portions (e.g., the remaining area) of the second uncoated portion 222 that may be formed from a portion of the second uncoated portion 222 being cut or removed, for example by notching (processing) or the like. In some embodiments, the second inner tab 251a may be formed (e.g., manufactured) separately from the second electrode 220 and then connected to the second uncoated portion 222, for example by welding and the like. In some embodiments, a material used for forming the second inner tab 251 may be substantially the same as a material of the second electrode 220.

In some embodiments, the number of second inner tabs 251a may be substantially the same as the number of second electrodes 220. Each of the second inner tabs 251a may extend (individually) from the second uncoated portion 222 of a different second electrode 220. The plurality of second inner tabs 251a may be stacked in the third direction. The plurality of second inner tabs 251a may be disposed parallel to each other. Accordingly, the second inner tab member 251 may be an assembly of the plurality of second inner tabs 251a stacked in the third direction. In one or more embodiments, the second inner tabs 251a that may be adjacent to one another also may contact each other, and may also be spaced apart from each other, for example by the thickness of the separator 230.

In some embodiments, for example the configuration of FIG. 4, the second outer tab member 252 may include a plurality of second outer tabs 252a.

The second outer tab 252a may be formed as foil extending in the first direction from the second uncoated portion 222 of the second electrode 220. The second outer tab 252a may be configured to have a geometric shape that is substantially rectangular. However, the shape of the second outer tab 252a is not limited thereto in some embodiments of the present invention, and may be configured to have a form that includes one or more shapes as suitable. In some embodiments, aspects (e.g., shape, area, and the like) of the second outer tab 252a may be substantially the same as the second inner tab 251a. In some embodiments, the second outer tab 252a may be configured differently from the second inner tab 251a.

The second outer tab 252a and the second inner tab 251a may be spaced apart from each other in the second direction. As an example, the second outer tab 252a and the second inner tab 251a may be sequentially disposed on the second uncoated portion 222 in the opposite direction (of the second direction).

The second outer tab 252a may be formed (e.g., integrally formed) with the second electrode 220. For example, the second outer tab 252a may be portions (e.g., the remaining area) of the second uncoated portion 222 that may be formed from a portion of the second uncoated portion 222 being cut or removed, for example by notching (processing) and/or the like. In some embodiments, the second outer tab 252a may be formed (e.g., manufactured) separately from the second electrode 220 and then connected to the second uncoated portion 222, for example by welding and the like. In some embodiments, a material that used for forming the second outer tab 252a may be substantially the same as a material of the second electrode 220.

In some embodiments, the number of second outer tabs 252a may be substantially the same as the number of second electrode 220. Each of the second outer tabs 252a may individually extend from the second uncoated portion 222 of a different second electrode 220. The plurality of second outer tabs 252a may be stacked in the third direction. The plurality of second outer tabs 252a may be disposed parallel to each other. Accordingly, the second outer tab member 252 may be an assembly of the plurality of second outer tabs 252a stacked in the third direction. In some embodiments, the second outer tabs 252a that may be adjacent to one another also may contact each other, and also may also be spaced apart from each other, for example by the thickness of the separator 230.

The second terminal 320 may function as a component that provides an electrical connection between the bus bar 3 (or an external power device) and the second electrode 220 of the secondary battery 2.

The second terminal 320 may be formed utilizing electrically conductive materials, including, but not limited to: aluminum; nickel; copper; and the like. The second terminal 320 may protrude outward from the cap plate 102. As an example, the second terminal 320 may be disposed on the outer surface of the cap plate 102 facing the space outside of the case 100.

The first terminal 310 and the second terminal 320 may be spaced apart from each other on the cap plate 102 in the second direction. As an example, the second terminal 320 may be disposed at a position that is spaced a predetermined distance apart from the first terminal 310 in the second direction.

In some embodiments, a surface of the second terminal 320 facing the cap plate 102 may be formed by passing through the cap plate 102, and may be disposed to face a second terminal hole 175 that is spaced apart from the first terminal hole 174. The surface of the second terminal 320 may be disposed to face the second tab member 250 through the second terminal hole 175. In some embodiments, for example the configuration of FIG. 8. the second terminal 320 may be configured to have a cross-sectional shape that is substantially rectangular, as an example. However, the cross-sectional shape of the second terminal 320 is not limited thereto in some embodiments of the present invention, and may be configured to have a form that includes one or more geometric shapes as suitable, including, but not limited to: circular; oval; polygonal; and the like.

The second terminal 320 may be electrically connected to the second electrode 220 by the second connecting member 500, for example as described below. Accordingly, the second terminal 320 may function as a negative terminal of the secondary battery 2.

The bus bar 3 may be coupled to (e.g., seated on) an upper surface of the second terminal 320. The bus bar 3 and the second terminal 320 may be structurally coupled, for by laser welding and the like.

A second gasket 321 may be disposed between the cap plate 102 and the second terminal 320 according to some embodiments, for example the configuration of FIG. 3.

The second gasket 321 may function as a component that may electrically insulate the cap plate 102 and the second terminal 320 from each other.

The second gasket 321 may be formed utilizing an insulating material, including, but not limited to: polyethylene (PE); polypropylene (PP); polyethylene terephthalate (PET); rubber; and the like. In some embodiments, an top (e.g., upper end) portion of the second gasket 321 may be disposed to surround a bottom (e.g., lower end) portion of the second terminal 320 arranged in the direction of the cap plate 102. The bottom (e.g., lower end) portion of the second gasket 321 may protrude into the space inside of the can 101 through the second terminal hole 175.

The second connecting member 500 may function as a component that provides an electrical connection between the second terminal 320 and the second tab member 250. The second connecting member 500 may be formed utilizing a conductive material, including but not limited to: copper; aluminum; nickel; and the like.

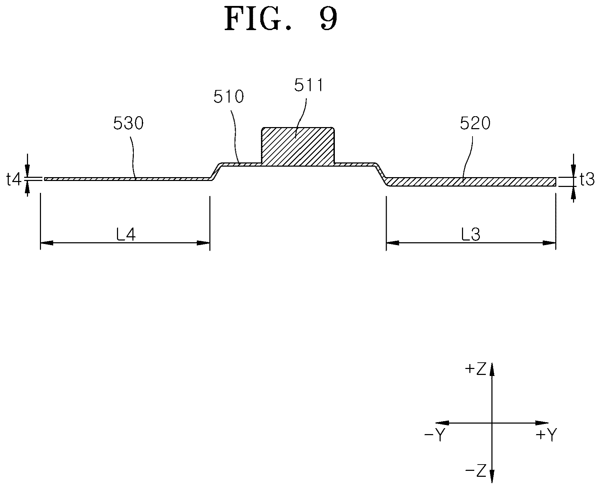

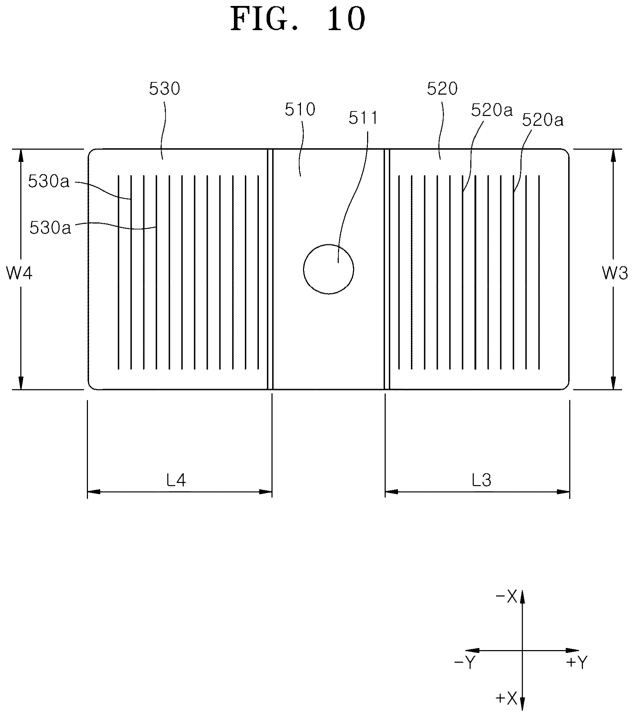

FIG. 9 is a front view schematically illustrating the configuration of the second connecting member 500 according to some embodiments of the present invention, for example the configuration of FIG. 3. FIG. 10 is a plan view schematically illustrating the configuration of the second connecting member 500, according to some embodiments of the present invention, for example the configuration of FIG. 3.

Referring to FIGS. 2 to 4, 9, and 10, the second connecting member 500 may include a second current collector 510, a second inner plate 520, and a second outer plate 530.

The second current collector 510 may be disposed inside of the case 100 and may contact the second terminal 320. The second current collector 510 may be electrically connected to the second terminal 320.

The second current collector 510 may be disposed between the second terminal 320 and the electrode assembly 200. The second current collector 510 may have the form of a flat plate disposed normal (e.g., perpendicular) to the first direction. In some embodiments, a lower surface of the second current collector 510 may be disposed to face the space formed between the second inner tab member 251 and the second outer tab member 252, which are spaced apart from each other in the second direction. In some embodiments, an upper surface of the second current collector 510 may be disposed to face a lower surface of the second terminal 320 disposed to face the space inside of the can 101. Both end portions (e.g., opposite ends) of the second current collector 510 may be disposed to face the first side portion 140 and the second side portion 150, respectively. In some embodiments, both end portions (e.g., opposite ends) of the second current collector 510 may be extended (e.g., bent) toward the electrode assembly 200.

In some embodiments, the second current collector 510 may include a second boss 511.

The second boss 511 be formed having a geometric shape that is substantially cylindrical (e.g., a column) extending from the upper surface of the second current collector 510 toward the lower surface of the second terminal 320. The second boss 511 may pass through the second terminal hole 175 of the cap plate 102 and may contact the lower surface of the second terminal 320. The second boss 511 and the second terminal 320 may be structurally coupled, for example by laser welding and the like.

The second inner plate 520 may be connected to the second current collector 510 and may contact the second inner tab member 251.

The second inner plate 520 may have a plate-like shape extending in the opposite direction (of the second direction) from one end portion of the second current collector 510 disposed to face the first side portion 140. The second inner plate 520 and the second inner tab member 251 may be disposed to face each other in the first direction. In some embodiments, a surface of the second inner plate 520 facing the second inner tab member 251 and may contact the second inner tab member 251.

The second inner tab member 251 and the second inner plate 520 may be structurally coupled, for example by laser welding and the like. As an example, a plurality of second inner welding lines 520a connecting the second inner tab member 251 and the second inner plate 520 may be formed on the second inner plate 520.

The second inner welding lines 520a may be portions (e.g., mixtures) of the second inner tab member 251 and the second inner plate 520 that are melted and hardened, for example by the heat generated during laser welding. The second inner welding lines 520a may extend in the third direction. Accordingly, the second inner welding lines 520a may connect (e.g., integrally connect) the plurality of second inner tabs 251a stacked in the third direction. The plurality of second inner welding lines 520a may be arranged in the second direction on the second inner plate 520.

The second outer plate 530 may be connected to the second current collector 510 and may contact the second outer tab member 252.

The second inner plate 520 and the second outer plate 530 may extend in opposite directions (e.g., both sides) from the second current collector 510. As an example, the second outer plate 530 may have a plate-like shape extending in the second direction from the other end portion of the second current collector 510 disposed to face the second side portion 150. The second outer plate 530 and the second outer tab member 252 may be disposed to face each other in the first direction. In some embodiments, a surface of the second outer plate 530 facing the second outer tab member 252 may contact the second outer tab member 252.

The second outer tab member 252 and the second outer plate 530 may be structurally coupled, for example by laser welding and the like. As an example, a plurality of second outer welding lines 530a connecting the second outer tab member 252 and the second outer plate 530 may be formed on the second outer plate 530.

The second outer welding lines 530a may be potions (e.g., mixtures) of the second outer tab member 252 and the second outer plate 530 that may be melted and hardened, for example by the heat generated during laser welding. The second outer welding lines 530a may extend in the third direction. Accordingly, the second outer welding lines 530a may connect (e.g., integrally connect) the plurality of second outer tabs 252a stacked in the third direction. The plurality of first outer welding lines 430a may be arranged in the second direction on the second outer plate 530.

FIG. 8 depicts that the second inner plate 520 may be configured to have a thickness t3 in the first direction and the second outer plate 530 may be configured to have a thickness t4 in the first direction. In some embodiments, the thickness t3 of the second inner plate 520 in the first direction and the thickness t4 of the second outer plate 530 in the first direction may be substantially the same. In some embodiments, the thickness t3 of the second inner plate 520 in the first direction and the thickness t4 of the second outer plate 530 in the first direction may be substantially different from each other.

In some embodiments, for example in the configuration of FIG. 8. the thickness t3 of the second inner plate 520 in the first direction may be relatively larger (e.g., greater) than the thickness t4 of the second outer plate 530 in the first direction. Accordingly, the resistance of the second inner plate 520, which is located closer to the central region of the electrode assembly 200 (a region in which current is relatively concentrated compared to the outer region of the electrode assembly 200), may be relatively lower or reduced compared to the resistance of the second outer plate 530. Accordingly, the secondary battery 2 according to some embodiments of the present invention, for example the configuration in FIG. 3, may be configured to prevent or reduce degradation of components, for example due to uneven heat generation. The secondary battery 2 may be configured to maintain the amounts of heat generation in the second inner plate 520 and the second outer plate 530 to be uniform (e.g., substantially the same amounts of heat generation), and thus the lifetime of the secondary battery 2 in the present invention may be maximized or increased.

For example, the thickness t3 of the second inner plate 520 in the first direction may be in a range from approximately 0.2 mm (or more) to approximately 2.0 mm (or less). For example, the thickness t4 of the second outer plate 530 in the first direction may be in a range from approximately 0.1 mm (or more) to approximately 1.9 mm (or less).

As an example, when the thickness t3 of the second inner plate 520 in the first direction may be relatively lower (e.g., less) than approximately 0.2 mm or the thickness t4 of the second outer plate 530 in the first direction may be relatively lower than approximately 0.1 mm, sufficient or suitable bonding strength may not be provided between the second inner plate 520 and the second inner tab member 251 or the second outer plate 530 and the second outer tab member 252.

As another example, when the thickness t3 of the second inner plate 520 in the first direction may be relatively larger (e.g., greater) than approximately 2.0 mm, or the thickness t4 of the second outer plate 530 in the first direction may be relatively larger than approximately 1.9 mm, a difficulty related to joining the second inner plate 520 and the second inner tab member 251 or the second outer plate 530 and the second outer tab member 252 may be substantially increased (e.g., excessively increased).

FIG. 10 depicts that the second inner plate 520 may be configured to have a length L3 in the second direction and the second outer plate 530 may be configured to have a length L4 in the second direction. In some embodiments, the length L3 of the second inner plate 520 in the second direction and the length L4 of the second outer plate 530 in the second direction may be substantially the same.

FIG. 10 depicts that the second inner plate 520 may be configured to have a width W3 in the third direction and the second outer plate 530 may be configured to have a width W4 in the third direction. In some embodiments, the width W3 of the second inner plate 520 in the third direction and the width W4 of the second outer plate 530 in the third direction may be substantially the same.

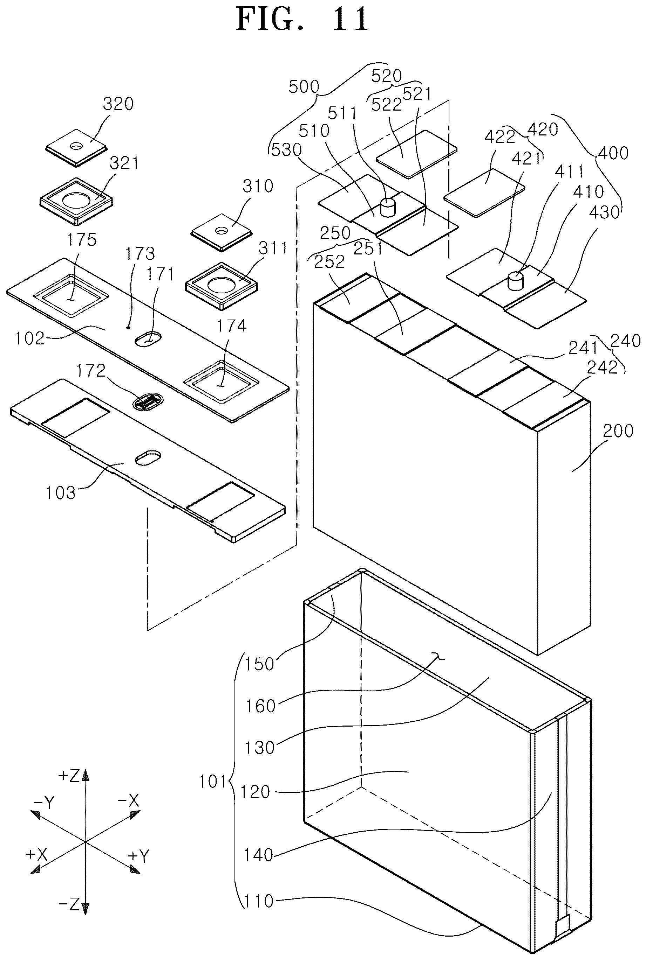

In some embodiments of the present invention, the secondary battery 2 may be configured as depicted in FIG. 11. Hereinafter, the secondary battery 2 according to some embodiments of the present invention, for example in the configuration of FIG. 11, will be described.

In some embodiments of the present invention, the secondary battery 2, for example in the configuration of FIG. 11, may be configured differently from the secondary battery 2 in other embodiments of present invention, for example in the configuration of the FIG. 3. The secondary battery 2 depicted in FIG. 11 may be configured to include some components and perform some functions that may be substantially similar to the secondary battery 2 depicted in FIG. 3, which is described in detail above. The secondary battery 2 depicted in FIG. 11 may have aspects of the configuration that are substantially different from the secondary battery in other embodiments of present invention, for example in the configuration of the FIG. 3, relating to the detailed configuration of the first connecting member 400 and the second connecting member 500.

Accordingly, in describing the secondary battery 2 according to some embodiments of the present invention, for example the configuration in FIG. 11, the detailed configurations of the first connecting member 400 and the second connecting member 500 will be described, which are different from the secondary battery 2 depicted in FIG. 3, which was previously described according to some embodiments of the present invention.

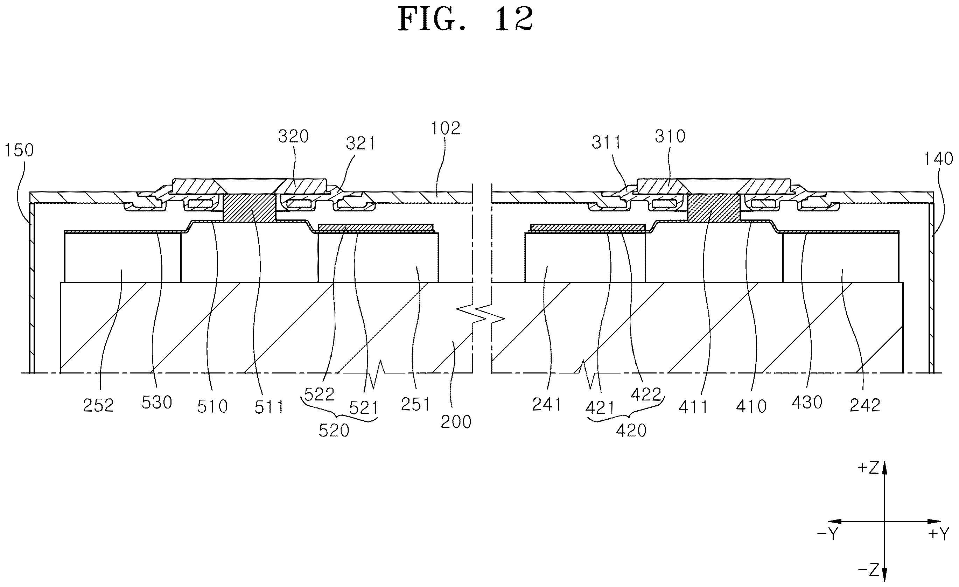

FIG. 11 is an exploded perspective view schematically illustrating a configuration of the secondary battery 2, according to some embodiments of the present invention. FIG. 12 is a cross-sectional view schematically illustrating the configuration of the secondary battery 2, according to some embodiments of the present invention.

Referring to FIGS. 11 and 12, the first inner plate 420 may include a first base plate 421 and a first reinforcement plate 422.

The first base plate 421 may extend from the first current collector 410 and may support the first reinforcement plate 422.

The first base plate 421 may have a plate-like shape extending in the second direction from an end portion of the first current collector 410 disposed to face the second side portion 150. The first base plate 421 and the first inner tab member 241 may be disposed to face each other in the first direction.

In some embodiments, a surface of the first base plate 421 facing the first inner tab member 241 may contact the first inner tab member 241. The first base plate 421 may be coupled to the first inner tab member 241, for example by laser welding and the like.

In some embodiments, a thickness of the first base plate 421 in the first direction may be substantially the same as the thickness t2 of the first outer plate 430 in the first direction.

The first reinforcement plate 422 may be arranged (e.g., stacked) on the first base plate 421. The first reinforcement plate 422 may be stacked on the first base plate 421 to increase the thickness of the first inner plate 420.

The first reinforcement plate 422 may be disposed on another surface (e.g., opposite surface) of the first base plate 421 (e.g., the surface that is arranged in a direction away from the first inner tab member 241). An area of the first reinforcement plate 422 may be substantially the same as an area of the first base plate 421. The first reinforcement plate 422 may be fixed to the first base plate 421 utilizing one or more coupling mechanisms, including, but not limited to: welding; bolting; and the like. The first reinforcement plate 422 may be electrically connected to the first base plate 421.

In some embodiments, the first reinforcement plate 422 may be formed utilizing substantially the same material as the first base plate 421. In one more embodiments, the first reinforcement plate 422 may be formed utilizing a material that is substantially different from the material of the first base plate 421. The first base plate 421 and the first reinforcement plate 422 may be formed utilizing one or more electrically conductive materials, including, but not limited to: copper; aluminum; nickel; and the like.

In some embodiments, a first value (e.g., sum of thicknesses for two of more plates) related to the thickness of the first reinforcement plate 422 in the first direction and the thickness of the first base plate 421 in the first direction may be substantially the same as a second value (e.g., the amount of a thickness for one plate) related to the thickness t1 of the first inner plate 420 in the first direction, for example as described above.

The second inner plate 520 may include a second base plate 521 and a second reinforcement plate 522.

The second base plate 521 may extend from the second current collector 510 and may support the second reinforcement plate 522.

The second base plate 521 may have a plate-like shape extending in the second direction from an end portion of the second current collector 510 disposed to face the first side portion 140. The second base plate 521 and the second inner tab member 251 may be disposed to face each other in the first direction.

In some embodiments, a surface of the second base plate 521 facing the second inner tab member 251 may contact the second inner tab member 251. The second base plate 521 may be coupled to the second inner tab member 251, for example by laser welding and the like.

In some embodiments, a thickness of the second base plate 521 in the first direction may be substantially the same as the thickness t4 of the second outer plate 530 in the first direction.

The second reinforcement plate 522 may be stacked on the second base plate 521. The second reinforcement plate 522 may be stacked on the second base plate 521 to increase the thickness of the second inner plate 520.

The second reinforcement plate 522 may be disposed on another surface (e.g., opposite surface) of the second base plate 521 (e.g., a surface that may be arranged in a direction away from the second inner tab member 251). An area of the second reinforcement plate 522 may be substantially the same as an area of the second base plate 521. The second reinforcement plate 522 may befixed to the second base plate 521 utilizing one or more coupling mechanisms, including but not limited to: welding; bolting; and the like. The second reinforcement plate 522 may be electrically connected to the second base plate 521.

In some embodiments, the second reinforcement plate 522 may be formed utilizing substantially the same material as the second base plate 521. In some embodiments, the second reinforcement plate 522 may be formed utilizing a material that may be substantially different from the second base plate 521. The second base plate 521 and the second reinforcement plate 522 may be formed utilizing one or more electrically conductive materials, including but not limited to: copper; aluminum; nickel; and the like.

A first value (e.g., sum of thicknesses for two or more plates) related to the thickness of the second reinforcement plate 522 in the first direction and the thickness of the second base plate 521 in the first direction may be substantially the same as a second value (e.g., thickness of one plate) related to the thickness t3 of the second inner plate 520 in the first direction, for example as described above.

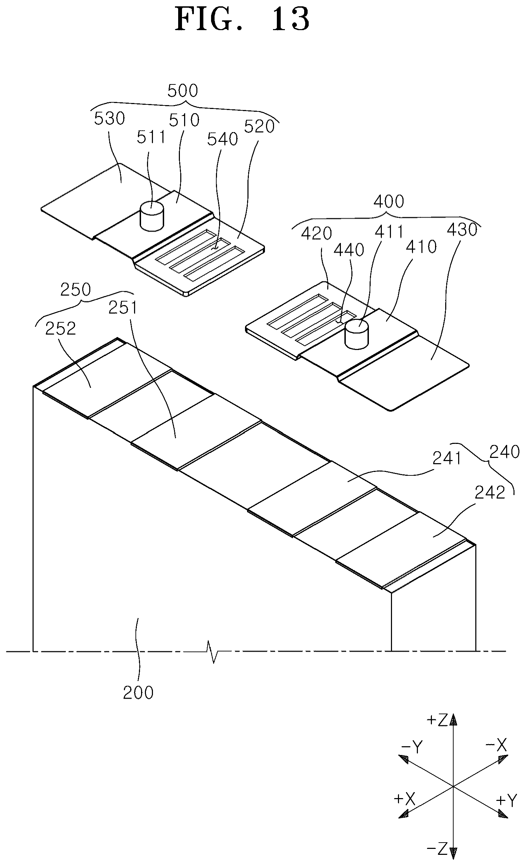

In some embodiments of the present invention, the secondary battery 2 may be configured as depicted in FIG. 13. Hereinafter, the secondary battery 2 according to some embodiments of the present invention, for example in the configuration of FIG. 13, will be described.

In some embodiments of the present invention, the secondary battery 2, for example in the configuration of FIG. 13, may be configured differently from the secondary battery 2 in other embodiments of present invention, for example in the configurations of the FIGS. 3 and 11. The secondary battery 2 depicted in FIG. 13 may be configured to include some components and perform some functions that may be substantially similar to the secondary battery 2 depicted in FIG. 3, which is described in detail above. The secondary battery 2 depicted in FIG. 13 may have aspects of the configuration that are substantially different from the secondary batteries in other embodiments of present invention, for example in the configurations of the FIGS. 3 and 11, relating to the detailed configuration of the first connecting member 400 and the second connecting member 500.

Accordingly, in describing the secondary battery 2 according to some embodiments of the present invention, for example the configuration in FIG. 13, the detailed configurations of the first connecting member 400 and the second connecting member 500 will be described, which are different from the secondary batteries 2 depicted in FIGS. 3 and 11, which were previously described according to some embodiments of the present invention.

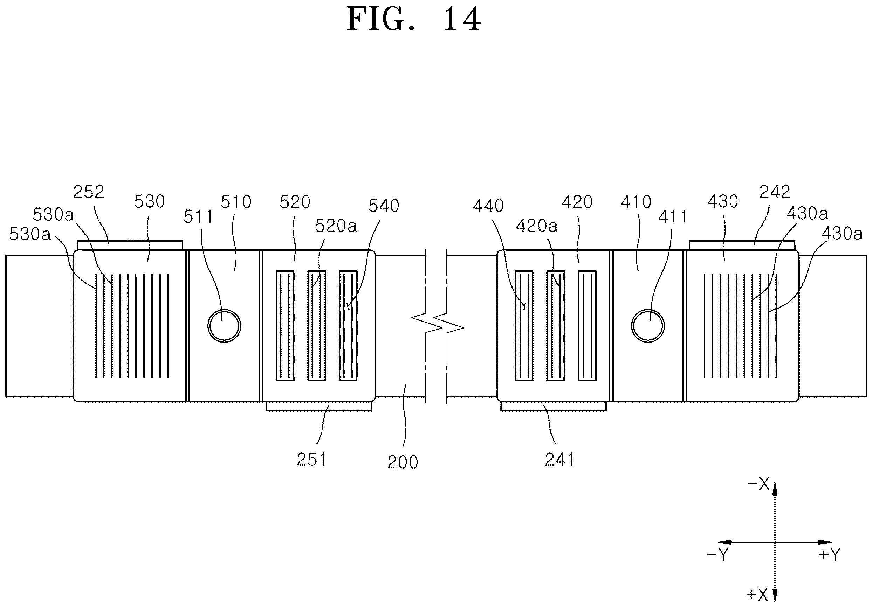

FIG. 13 is an exploded perspective view schematically illustrating a configuration of the secondary battery 2, according to some embodiments of the present invention. FIG. 14 is a plan view schematically illustrating the configuration of the secondary battery 2, according to some embodiments of the present invention.

Referring to FIGS. 13 and 14, the secondary battery 2 may include a first groove 440.

The first groove 440 may be formed to have a shape that is substantially similar to a long, narrow channel (e.g., groove shape). The first groove 400 may be configured to have a curved (e.g., concave) form from an opposite surface of the first inner plate 420 facing the cap plate 102 and towards the first inner tab member 241. The first groove 440 may extend in the third direction. For example, a longitudinal direction (length in the x-axis of FIG. 13) of the first groove 440 may be parallel to the third direction.

In some embodiments, the first inner welding line 420a may be disposed on a bottom surface of the first groove 440 that may be formed on an inner side of the first inner plate 420. Accordingly, in the secondary battery 2 according to some embodiments of the present invention, for example in the configuration of FIG. 13, a thickness of a portion of the first inner plate 420, in which the first inner welding line 420a may be formed in an area (e.g., entire area) of the first inner plate 420, may be relatively smaller and reduced by the first groove 440, and thus the bonding between the first inner plate 420 and the first inner tab member 241 may be optimized or improved.

In some embodiments, a plurality of first grooves 440 may be provided. The plurality of first grooves 440 may be arranged at predetermined intervals in the second direction. One or more first inner welding lines 420a may be formed on the inner side of each of the first grooves 440.

In some embodiments, the secondary battery 2 may further include a second groove 540.

The second groove 540 may be formed to have a shape that is substantially groove shaped, may be curved (e.g., concave) and may be formed from an opposite surface of the second inner plate 520 facing the cap plate 102 toward the second inner tab member 251. The second groove 540 may extend in the third direction. For example, a longitudinal direction (length in the x-axis of FIG. 13) of the second groove 540 may be parallel to the third direction.

In some embodiments, the second inner welding line 520a may be disposed on a bottom surface of the second groove 540 that may be formed on an inner side of the second inner plate 520. Accordingly, in the secondary battery 2 according to some embodiments of the present invention, for example in the configuration of FIG. 13, a thickness of a portion of the second inner plate 520, in which the second inner welding line 520a may be formed in an area (e.g., entire area) of the second inner plate 520, may be made relatively smaller and reduced by the second groove 540, and thus bonding between the second inner plate 520 and the second inner tab member 251 may be improved or optimized.

In some embodiments, a plurality of second grooves 540 may be provided. The plurality of second grooves 540 may be arranged at predetermined intervals in the second direction. One or more second inner welding lines 520a may be formed on the inner side of each of the second grooves 540.

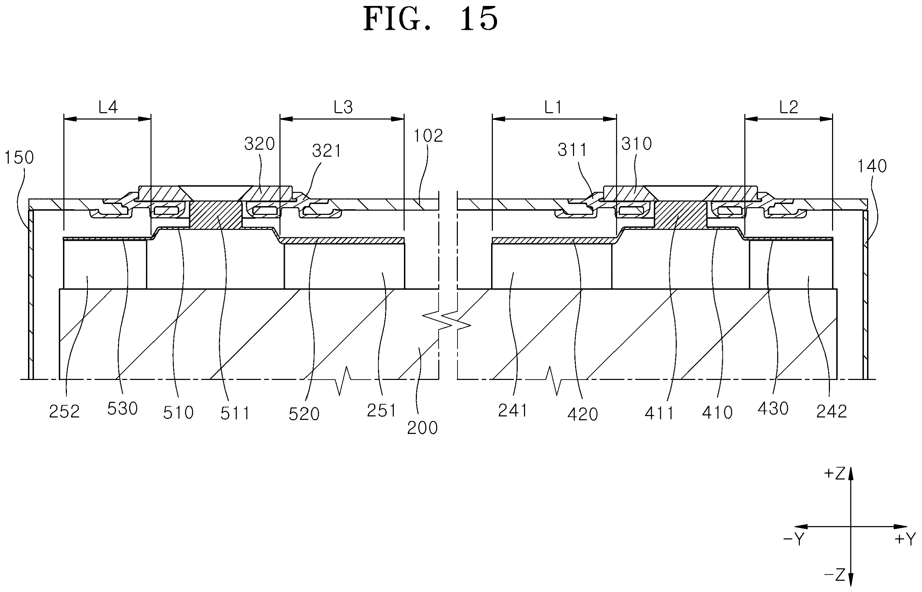

In some embodiments of the present invention, the secondary battery 2 may be configured as depicted in FIG. 15. Hereinafter, the secondary battery 2 according to some embodiment of the present invention, for example in the configuration of FIG. 15, will be described.

In some embodiments of the present invention, the secondary battery 2, for example in the configuration of FIG. 15, may be configured differently from the secondary battery 2 in other embodiments of present invention, for example in the configurations of the FIGS. 3, 11 and 13. The secondary battery 2 depicted in FIG. 15 may be configured to include some components and perform some functions that may be substantially similar to the secondary battery 2 depicted in FIG. 3, which is described in detail above. The secondary battery 2 depicted in FIG. 15 may have aspects of the configuration that are substantially different from the secondary batteries in other embodiments of present invention, for example in the configurations of the FIGS. 3, 11, and 13 relating to the detailed configuration of the first connecting member 400 and the second connecting member 500.

Accordingly, in describing the secondary battery 2 according to some embodiments of the present invention, for example the configuration in FIG. 15, the detailed configurations of the first connecting member 400 and the second connecting member 500 will be described, which are different from the secondary batteries 2 depicted in FIGS. 3, 11, and 13, which were previously described according to some embodiments of the present invention.

FIG. 15 is a cross-sectional view schematically illustrating a configuration of the secondary battery according to some embodiments of the present invention.

Referring to FIG. 15, the length L1 of the first inner plate 420 in the second direction may be relative larger (e.g., greater) than the length L2 of the first outer plate 430 in the second direction.

For example, the thickness t1 and length L1 of the first inner plate 420 may be formed to be relatively larger than the thickness t2 and length L2 of the first outer plate 430.

Accordingly, the secondary battery 2 in some embodiments of the present invention, for example in the configuration of FIG. 15, may provide efficient prevention or reduction of the degradation of components, for example due to uneven heat generation, in a manner that may be increased or optimized. The secondary battery 2 may be configured to maintain the amounts of heat generation by further lowering or reducing the resistance of the first inner plate 420.

In some embodiments, the length L3 of the second inner plate 520 in the second direction may be greater than the length L4 of the second outer plate 530 in the second direction.

For example, in some embodiments, the thickness t3 and length L3 of the second inner plate 520 may be formed to be greater than the thickness t4 and length L4 of the second outer plate 530.

Accordingly, the secondary battery 2 in some embodiments of the present invention, for example in the configuration of FIG. 15, may provide efficient prevention or reduction of the degradation (e.g., deterioration) of components, for example due to uneven heat generation, in a manner that may be increased or optimized. The secondary battery 2 may be configured to maintain the amounts of heat generation by further lowering or reducing the resistance of the second inner plate 520.

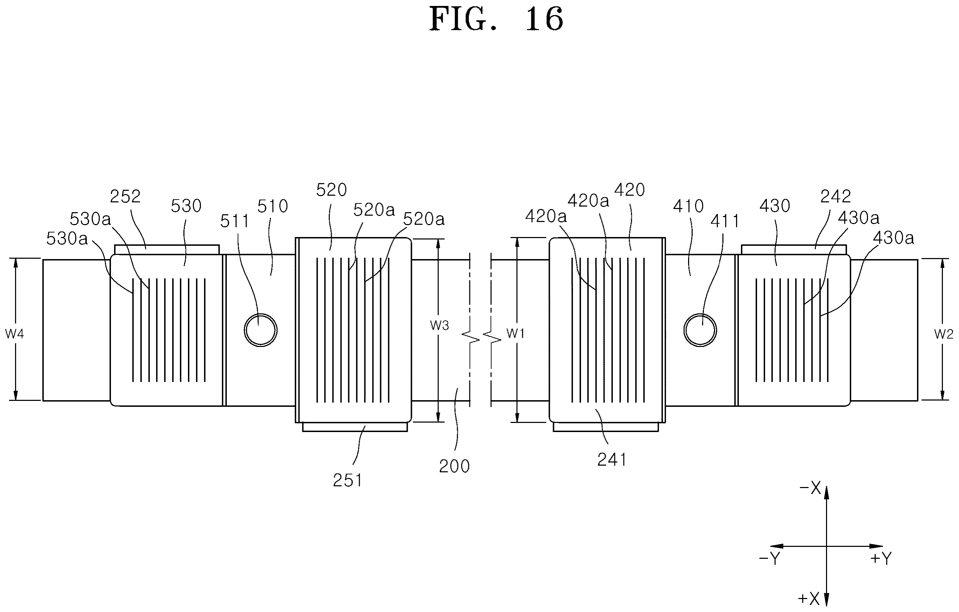

In some embodiments of the present invention, the secondary battery 2 may be configured as depicted in FIG. 16. Hereinafter, the secondary battery 2 according to some embodiment of the present invention, for example in the configuration of FIG. 16, will be described.

In some embodiments of the present invention, the secondary battery 2, for example in the configuration of FIG. 16, may be configured differently from the secondary battery 2 in other embodiments of present invention, for example in the configurations of the FIGS. 3, 11, 13 and 15. The secondary battery 2 depicted in FIG. 16 may be configured to include some components and perform some functions that may be substantially similar to the secondary battery 2 depicted in FIG. 3, which is described in detail above. The secondary battery 2 depicted in FIG. 16 may have aspects of the configuration that are substantially different from the secondary batteries in other embodiments of present invention, for example in the configurations of the FIGS. 3, 11,13 and 15 relating to the detailed configuration of the first connecting member 400 and the second connecting member 500.

Accordingly, in describing the secondary battery 2 according to some embodiments of the present invention, for example the configuration in FIG. 16, the detailed configurations of the first connecting member 400 and the second connecting member 500 will be described, which are different from the secondary batteries 2 depicted in FIGS. 3, 11,13 and 15, which were previously described according to some embodiments of the present invention.

FIG. 16 is a cross-sectional view schematically illustrating a configuration of the secondary battery 2, according to some embodiments of the present invention.

Referring to FIG. 16, in some embodiments, the width W1 of the first inner plate 420 in the third direction may be greater than the width W2 of the first outer plate 430 in the third direction.

For example, in the embodiment, the thickness t1 and width W1 of the first inner plate 420 may be formed to be greater than the thickness t2 and width W2 of the first outer plate 430.

Accordingly, the secondary battery 2 in some embodiments of the present invention, for example in the configuration of FIG. 16, may provide efficient prevention and reduction of the degradation of components, for example due to uneven heat generation, in a manner that may be increased and optimized. The secondary battery 2 may be configured to maintain the amounts of heat generation by further lowering and reducing the resistance of the first inner plate 420.

In FIG. 16, the length L1 of the first inner plate 420 in the second direction and the length L2 of the first outer plate 430 in the second direction are the same is illustrated, but the present embodiment is not limited thereto, and as in FIG. 15, the length L1 of the first inner plate 420 in the second direction may be formed to be greater than the length L2 of the first outer plate 430 in the second direction.

In the embodiment, the width W3 of the second inner plate 520 in the third direction may be greater than the width W4 of the second outer plate 530 in the third direction.

That is, in the embodiment, the thickness t3 and width W3 of the second inner plate 520 may be formed to be greater than the thickness t4 and width W4 of the second outer plate 530.

Accordingly, the secondary battery 2 according to the present embodiment may more effectively prevent deterioration of components due to uneven heat generation by further lowering the resistance of the second inner plate 520.

In FIG. 16, the length L3 of the second inner plate 520 in the second direction and the length L4 of the second outer plate 530 in the second direction may be substantially the same. However, some embodiments of the present invention are not limited thereto. For example, as in FIG. 15, the length L3 of the second inner plate 520 in the second direction may be formed to be greater than the length L4 of the second outer plate 530 in the second direction.

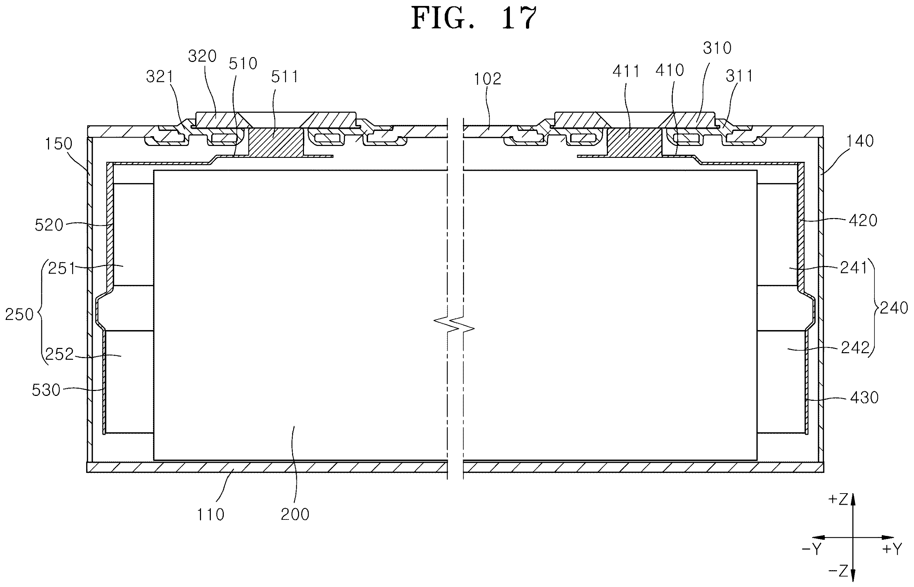

In some embodiments of the present invention, the secondary battery 2 may be configured as depicted in FIG. 17 (e.g., according to a sixth embodiment). Hereinafter, the secondary battery 2 according to some embodiment of the present invention, for example in the configuration of FIG. 17, will be described.

In some embodiments of the present invention, the secondary battery 2, for example in the configuration of FIG. 17, may be configured differently from the secondary battery 2 in other embodiments of present invention, for example in the configurations of the FIGS. 3, 11, 13, 15 and 16. The secondary battery 2 depicted in FIG. 17 may be configured to include some components and perform some functions that may be substantially similar to the secondary battery 2 depicted in FIG. 3, which is described in detail above. The secondary battery 2 depicted in FIG. 17 may have aspects of the configuration that are substantially different from the secondary batteries in other embodiments of present invention, for example in the configurations of the FIGS. 3, 11,13, 15 and 16 relating to the detailed configuration of the first connecting member 400 and the second connecting member 500.

Accordingly, in describing the secondary battery 2 according to some embodiments of the present invention, for example the configuration in FIG. 17, the detailed configurations of the first connecting member 400 and the second connecting member 500 will be described, which are different from the secondary batteries 2 depicted in FIGS. 3, 11,13, 15, and 16 which were previously described according to some embodiments of the present invention.

FIG. 17 is a cross-sectional view schematically illustrating a configuration of the secondary battery according to some embodiments of the present invention.

In some embodiments, the first direction may be a horizontal direction (y-axis direction in FIG. 17), and the second direction may be vertical direction (z-axis direction in FIG. 17).

In some embodiments, the first tab member 240 and the second tab member 250 may protrude on both sides (e.g., opposite directions) from the electrode assembly 200.

As an example, the first inner tab member 241 and the first outer tab member 242 may extend in the first direction from the first electrode 210 of the electrode assembly 200.

A distance from the cap plate 102 to the first inner tab member 241 may be relatively smaller than a distance from the cap plate 102 to the first outer tab member 242. For example, the first inner tab member 241 and the first outer tab member 242 may be sequentially arranged in an opposite direction (of the second direction).

The second inner tab member 251 and the second outer tab member 252 may extend in an opposite direction (of the first direction) from the second electrode 220 of the electrode assembly 200.

A distance from the cap plate 102 to the second inner tab member 251 may be relatively smaller than a distance from the cap plate 102 to the second outer tab member 252. For example, the second inner tab member 251 and the second outer tab member 252 may be sequentially arranged in the opposite direction (of the second direction).

In some embodiments, the bottom portion 110 of the can 101 and the cap plate 102 may be disposed to face each other in the second direction. As an example, the cap plate 102 may be disposed to be spaced a predetermined distance apart from the bottom portion 110 in the second direction.

In some embodiments, the first side portion 140 and the second side portion 150 may be disposed to face each other in the first direction. As an example, the first side portion 140 may be disposed to be spaced a predetermined distance apart from the second side portion 150 in the first direction.

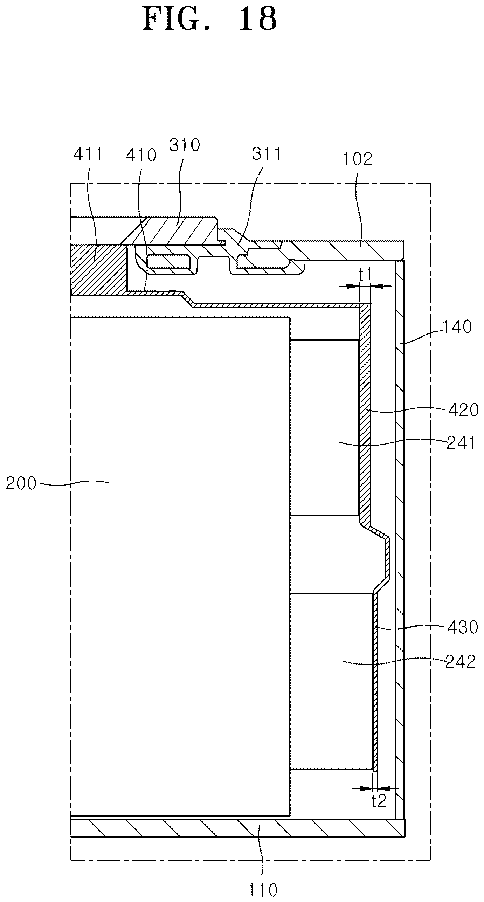

Accordingly, the first inner tab member 241 and the first outer tab member 242 according to some embodiments of the present invention, for example the configuration of FIG. 18, may be disposed to face the first side portion 140 inside of the can 101, and the second inner tab member 251 and the second outer tab member 252 may be disposed to face the second side portion 150.

FIG. 18 is an enlarged view schematically illustrating a configuration of a first connecting member according to some embodiments of the present invention, for example in the configuration of FIG. 17.

Referring to FIG. 18, the first current collector 410 may be disposed between a side surface (top surface based on FIG. 18) of the electrode assembly 200, from which the first tab member 240 and the second tab member 250 may not protrude, and the first terminal 310.

The first inner plate 420 may extend in the opposite direction (of the second direction) from an end portion of the first current collector 410 facing the first side portion 140. Both surfaces of the first inner plate 420 may be disposed to face the first inner tab member 241 and the first side portion 140, respectively. A surface of the first inner plate 420 may contact the first inner tab member 241 and may be coupled to the first inner tab member 241, for example by laser welding and the like.

The first outer plate 430 may extend in the opposite direction (of the second direction) from an end portion of the first inner plate 420 disposed to face the bottom portion 110. For example, in some embodiments, the first inner plate 420 and the first outer plate 430 may sequentially extend from the first current collector 410 in the opposite direction (of the second direction). Both surfaces of the first outer plate 430 may be disposed to face the first outer tab member 242 and the first side portion 140, respectively. A surface of the first outer plate 430 may contact the first outer tab member 242 and may be coupled to the first outer tab member 242, for example by laser welding and the like.

A thickness t1 of the first inner plate 420 in the first direction may be greater than a thickness t2 of the first outer plate 430 in the first direction. The thickness t1 of the first inner plate 420 in the first direction and the thickness t2 of the first outer plate 430 in the first direction may be configured within a range of the thickness t1 of the first inner plate 420 in the first direction and the thickness t2 of the first outer plate 430 in the first direction, for example according to some embodiments of the present invention relating to the configuration in FIG. 6.

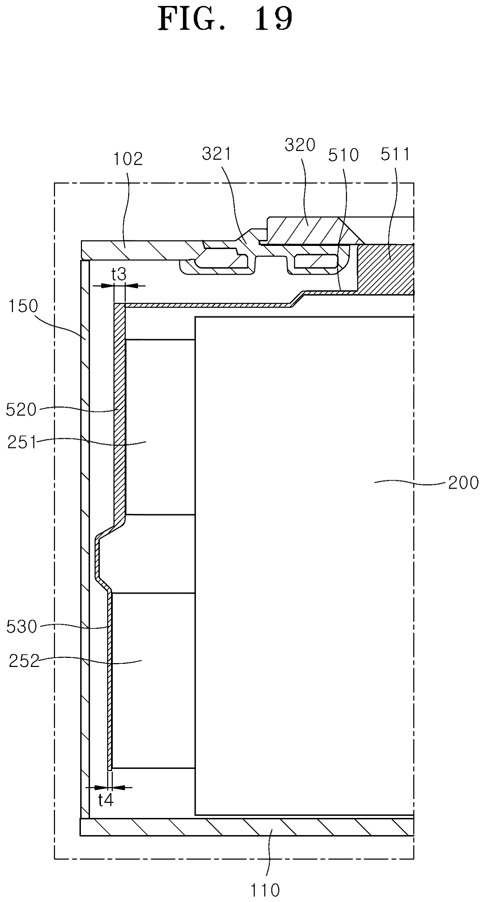

FIG. 19 is an enlarged view schematically illustrating a configuration of a second connecting member according to some embodiments of the present invention, for example in the configuration of FIG. 17.

Referring to FIG. 19, the second current collector 510 may be disposed between a side surface (top surface based on FIG. 18) of the electrode assembly 200, from which the first tab member 240 and the second tab member 250 may not protrude, and the second terminal 320.

The second inner plate 520 may extend in the opposite direction of the second direction from an end portion of the second current collector 510 that may be facing the second side portion 150. Both surfaces of the second inner plate 520 may be disposed to face the second inner tab member 251 and the second side portion 150, respectively. A surface of the second inner plate 520 may contact the second inner tab member 251 and may be coupled to the second inner tab member 251, for example by laser welding and the like.

The second outer plate 530 may extend in the opposite direction (of the second direction) from an end portion of the second inner plate 520 disposed to face the bottom portion 110. For example, in some embodiments, the second inner plate 520 and the second outer plate 530 may sequentially extend from the second current collector 510 in the opposite direction of the second direction. Both surfaces of the second outer plate 530 may be disposed to face the second outer tab member 252 and the second side portion 150, respectively. A surface of the second outer plate 530 may contact the second outer tab member 252 and may be coupled to the second outer tab member 252, for example by laser welding and the like.

A thickness t3 of the second inner plate 520 in the first direction may be greater than a thickness t4 of the second outer plate 530 in the first direction. The thickness t3 of the second inner plate 520 in the first direction and the thickness t4 of the second outer plate 530 in the first direction may be configured within the range of the thickness t3 of the second inner plate 520 in the first direction and the thickness t4 of the second outer plate 530 in the first direction according to some embodiments of the present invention.

According to the present invention, the secondary battery may be configured to prevent and reduce uneven amounts of heat generation, for example during the operation of the secondary battery, according to the location of a current collecting component. Additionally, degradation of components, for example due to uneven heat generation can be prevented and reduced, and the lifetime of the secondary battery can be increased and optimized.

However, the scope of the present invention is not limited to the above effects, and other technical effects that are not mentioned will be clearly understood by those skilled in the art from the following description of the present invention.

While the present invention has been described with reference to embodiments shown in the drawings, these embodiments are merely illustrative and it should be understood that various modifications and equivalent other embodiments can be derived by those skilled in the art on the basis of the embodiments.

## Claims

1. A secondary battery (2) comprising:
a case (100);
an electrode assembly (200) inside of the case (100) and comprising a first electrode (210) and a second electrode (220);
a first tab member (240) comprising a first inner tab member (241) and a first outer tab member (242) extending in a first direction from the first electrode (210);
a first terminal (310) protruding outward from the case (100);
a first current collector (410) inside of the case (100) and contacting the first terminal (310);
a first inner plate (420) connected to the first current collector (410) and contacting the first inner tab member (241), the first inner plate (420) has a first thickness in the first direction; and
a first outer plate (430) connected to the first current collector (410) and contacting the first outer tab member (242), the first outer plate (430) has a second thickness in the first direction different from the first thickness.

2. The secondary battery (2) as claimed in claim 1, wherein the first thickness of the first inner plate (420) in the first direction is greater than the second thickness of the first outer plate (430) in the first direction.

3. The secondary battery (2) as claimed in claim 1 or 2, wherein the first inner plate (420) comprises:
a first base plate (421) extending from the first current collector (410); and
a first reinforcement plate (422) on the first base plate (421) and connected to the first base plate (421).

4. The secondary battery (2) as claimed in any of the preceding claims, further comprising one or more first grooves (440) formed concavely from the first inner plate (420) arranged towards the first inner tab member (241).

5. The secondary battery (2) as claimed in any of the preceding claims, wherein:
the first inner tab member (241) and the first outer tab member (242) are at a distance apart from each other in a second direction crossing the first direction; and
the first inner plate (420) and the first outer plate (430) are at a distance apart from each other in the second direction.

6. The secondary battery (2) as claimed in any of the preceding claims, wherein the case (100) comprises:
a can (101) comprising an opening (160); and
a cap plate (102) that seals the opening (160) and supports the first terminal (310), and
the first tab member (240) arranged towards the cap plate (102).

7. The secondary battery (2) as claimed in any of the preceding claims, wherein the first current collector (410) is arranged towards a space between the first inner tab member (241) and the first outer tab member (242).

8. The secondary battery (2) as claimed in any of the preceding claims, wherein the first inner plate (420) and the first outer plate (430) extend in opposite directions from the first current collector (410).

9. The secondary battery (2) as claimed in any of the claims 6 to 8, wherein:
the can (101) comprises a first side portion (140) and a second side portion (150) arranged towards each other in the second direction; and
the first side portion (140) at a first distance from the first tab member (240) and the second side portion (150) at a second distance from the first tab member (240), wherein the first distance is smaller than the second distance.

10. The secondary battery (2) as claimed in claim 9, wherein the first side portion (140) is at a third distance from the first outer tab member (242) and the first side portion (140) is at a fourth distance from the first inner tab member (241), wherein the third distance is smaller than the fourth distance.

11. The secondary battery (2) as claimed in any of the claims 1 to 5, wherein the case (100) comprises:
a can (101) comprising an opening (160); and
a cap plate (120) that seals the opening (160) and supports the first terminal (310), and
the first tab member (240) is arranged towards an inner surface of the can (101).

12. The secondary battery (2) as claimed in claim 11, wherein the cap plate is (120) at a first distance from the first inner tab member (241) and the cap plate (120) is at a second distance from the first outer tab member (242), wherein the first distance is smaller than the second distance.

13. The secondary battery (2) as claimed in claim 11 or 12, wherein the first inner plate (420) and the first outer plate (430) extend in order from the first current collector (410).

14. The secondary battery (2) as claimed in any of the preceding claims, further comprising:
a second tab member (250) comprising a second inner tab member (251) and a second outer tab member (252) extending in the first direction from the second electrode (220);
a second terminal (320) protruding outward from the case (100) and at a distance from the first terminal (310);
a second current collector (510) inside of the case (100) and contacting the second terminal (320);
a second inner plate (520) connected to the second current collector (510) and contacting the second inner tab member (251); and
a second outer plate (530) connected to the second current collector (510) and contacting the second outer tab member (252),
wherein a third thickness of the second inner plate (520) in the first direction is different than a fourth thickness of the second outer plate (530) in the first direction.

15. A battery module comprising:
a housing (1); and
one or more secondary batteries (2) inside of the housing,
wherein each of the one or more secondary batteries (2) comprises:
a case (100);
an electrode assembly (200) inside the of case (100) and comprising a first electrode (210) and a second electrode (220);
a first tab member (240) comprising a first inner tab member (241) and a first outer tab member (242) extending in a first direction from the first electrode (210);
a first terminal (310) protruding outward from the case (100);
a first current collector (410) inside of the case (100) and contacting the first terminal (310);
a first inner plate (420) connected to the first current collector (410) and contacting the first inner tab member (241), the first inner plate (420) has a first thickness in the first direction; and
a first outer plate (430) connected to the first current collector (410) and contacting the first outer tab member (242), the first outer plate (430) has a second thickness in the first direction different from the first thickness.
